(19) Europäisches Patentamt
European Patent Office
Office européen des brevets

(11) **EP 1 805 978 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(21) Anmeldenummer: **05801762.5**

(22) Anmeldetag: **28.10.2005**

(51) Int Cl.:
*H04N 1/028* (2006.01)    *G01J 3/447* (2006.01)
*G01J 3/46* (2006.01)    *H04N 1/00* (2006.01)

(86) Internationale Anmeldenummer:
**PCT/EP2005/011592**

(87) Internationale Veröffentlichungsnummer:
**WO 2006/045621 (04.05.2006 Gazette 2006/18)**

(54) **VERFAHREN ZUR KORREKTUR VON BILDMESSWERTEN**

SCANNER FOR PHOTOELECTRIC MEASUREMENT OF AN OBJECT

DISPOSITIF DE BALAYAGE POUR LA MESURE PHOTOÉLECTRIQUE D'UN OBJET À MESURER

(84) Benannte Vertragsstaaten:
**CH DE FR GB IT LI**

(30) Priorität: **28.10.2004 EP 04025620**
**16.02.2005 CH 26405**

(43) Veröffentlichungstag der Anmeldung:
**11.07.2007 Patentblatt 2007/28**

(73) Patentinhaber: **X-Rite Europe GmbH**
**8105 Regensdorf (CH)**

(72) Erfinder:
• **EHBETS, Peter**
**8046 Zürich (CH)**
• **KOHLBRENNER, Adrian**
**8800 Thalwil (CH)**
• **FRICK Beat**
**8107 Buchs (CH)**

(74) Vertreter: **Schwabe - Sandmair - Marx**
**Patentanwälte**
**Stuntzstraße 16**
**81677 München (DE)**

(56) Entgegenhaltungen:
EP-A- 1 094 309        EP-A- 1 154 247
DE-A1- 19 650 223      US-A- 4 449 147
US-A- 4 575 249

EP 1 805 978 B1

**Beschreibung**

Die Erfindung betrifft eine Messeinrichtung zur bildelementweisen fotoelektrischen Ausmessung eines Messobjekts, insbesondere eines vorzugsweise mehrfarbig bedruckten Druckbogens, gemäss dem Oberbegriff des unabhängigen Anspruchs 1.

Messeinrichtungen und Abtastvorrichtungen dieser Art werden im allgemeinen als Scanner bezeichnet. Sie werden z.B. in der grafischen Industrie zur Qualitätskontrolle und zur Steuerung von Druckprozessen eingesetzt.

Eine erste bekannte Art von herkömmlichen Scannern weist einen einzelnen Messkopf auf, der in einer oder in zwei Dimensionen relativ zum Messobjekt - in der Regel einem Druckbogen - bewegt werden kann. Im Falle einer eindimensionalen Beweglichkeit des Messkopfs ist das Messobjekt in der anderen Dimension beweglich. Der Messkopf tastet jeweils einen kleinen Bereich des Messobjekts, ein sog. Bildelement oder Pixel, fotoelektrisch ab, wobei jedes abzutastende Bildelement durch entsprechende Bewegung des Messkopfs bzw. des Messobjekts einzeln angefahren wird. Die Abtastung kann dabei densitometrisch, farbmetrisch oder spektral erfolgen, wobei entsprechende Messsignale erzeugt werden, die dann zur Verarbeitung und/oder Auswertung zur Verfügung stehen. Ein wesentlicher Nachteil dieser bekannten Scanner ist in dem durch das einzelne Anfahren der zu messenden Bildelemente bedingten hohen Zeitaufwand für die vollständige Abtastung eines Druckbogens üblicher Grösse zu sehen, wodurch sie für den Einsatz zur automatischen Steuerung bzw. Regelung von modernen Druckmaschinen in der Regel ungeeignet sind.

Eine zweite bekannte Art von herkömmlichen Scannern ist z.B. in der US-A 6,028,682 (≈ DE-A 196 50 223) beschrieben. Diese gattungsgemässen Scanner sind  mit einem Messwagen ausgestattet, der sich in einer Dimension quer über einen Messtisch erstreckt und motorisch angetrieben in der zweiten Dimension über den Messtisch verfahrbar ist. Im Messwagen befindet sich ein langgestreckter Messbalken, der eine grosse Anzahl von in einer geraden Reihe angeordneten Messköpfen enthält. Beim Bewegen des Messwagens über den Messtisch tastet jeder Messkopf das Messobjekt längs einer eigenen Abtastspur ab. Die Messköpfe sind als reine Beleuchtungs- und Aufpickanordnungen ausgestaltet und werden über je einen optischen Lichtleitermultiplexer zeitsequentiell mit einer Lichtquelle und einem Spektrometer verbunden. Diese bekannten Scanner sind zwar schon deutlich schneller als die vorstehend erwähnten Scanner mit Einzelmesskopf und auch für Anwendungen zur farbmetrischen Steuerung eines Druckprozesses geeignet, sie sind aber einerseits immer noch relativ langsam und anderseits mechanisch bzw. optisch extrem aufwändig.

Ausgehend von dem durch die US-A 6.028,682 (≈ DE-A 196 50 223) gegebenen Stand der Technik sollen durch die vorliegende Erfindung nun eine Messeinrichtung und eine Abtastvorrichtung der gattungsgemässen Art hinsichtlich Abtastgeschwindigkeit und Konstruktionsaufwand verbessert werden, wobei gleichzeitig die Eignung für Qualitätskontrollzwecke in der grafischen Industrie und für die farbmetrische Steuerung von Druckprozessen erhalten bleiben soll.

Die Lösung dieser der Erfindung zugrundeliegenden Aufgabe ergibt sich aus den im kennzeichnenden Teil des unabhängigen Anspruchs 1. Besonders vorteilhafte Ausgestaltun gen und Weiterbildungen sind Gegenstand der abhängigen Ansprüche.

Für die Bilderfassung, d.h. Digitalisierung von Dokumenten und analogen körperlichen Vorlagen, sind anderseits Scanner bekannt, die mit Zeilenabtastem ausgestattet sind, welche jeweils die Bildelemente einer ganzen Bildzeile auf einmal fotoelektrisch ausmessen können. Je nach Bauart wird dabei entweder der Zeilenabtaster über die ortsfeste Vorlage oder die Vorlage quer zum ortsfesten Zeilenabtaster bewegt, um Zeile für Zeile die gesamte Vorlage abzutasten und dann zu digitalisieren. Der Zeilenabtaster umfasst eine linienförmige Lichtquelle, die jeweils eine ganze Bildzeile simultan beleuchtet, und eine linienförmige Sensorzeile aus einer grossen Anzahl von  Einzelsensoren, denen das vorn Messobjekt remittierte Licht über eine ebenfalls linienförmige optische Anordnung zugeführt wird. Die maximale räumliche Auflösung ist theoretisch durch die Grösse der Einzelsensoren gegeben, wird aber in der Praxis durch Streulicht- bzw. Übersprecheffekte mehr oder weniger reduziert. Die Farbseparation erfolgt entweder zeitsequentiell dadurch, dass zur Beleuchtung der Bildzeile mehrere verschiedenfarbige Lichtquellen (meist rot, blau, grün) verwendet werden oder eine farblich umschaltbare Lichtquelle eingesetzt wird, oder dass bei im wesentlichen weissem Beleuchtungslicht mehrere Sensorzeilen parallel eingesetzt werden, die jeweils Licht unterschiedlicher Wellenlängenbereiche (rot, blau, grün) empfangen, was z.B. durch geeignete Vorschaltfilter erreicht werden kann. Als Lichtquellen werden häufig Licht emittierende Dioden (LED) oder Leuchtstofflampen eingesetzt. Als Sensorzeilen sind zwei verschiedene Anordnungen üblich. Bei der ersten Anordnung, dem sog. Contact Image Sensor (CIS), wird die Bildzeile mit aneinandergereihten Gradientenindex-Linsen (sog. Selfoc Arrays) im Massstab 1:1 auf die optoelektronische Detektorzeile abgebildet, wobei die Detektorzeile aus nahtlos aneinandergereihten optoelektronischen Liniendetektoren (z.B. Photodioden-Arrays) besteht. Die Länge der Detektorzeile ist hierbei mit der Länge der abzutastenden Bildzeile identisch. Bei der zweiten Anordnung wird die Bildzeile über ein Objektiv auf die Detektorzeile abgebildet, wobei häufig eine verkleinernde optische Anordnung gewählt wird, beispielsweise eine Abbildung im Massstab 1:4. Dies ermöglicht insbesondere, dass die Länge der Detektorzeile kleiner als die Länge der Bildzeile sein kann. Bei genügender Verkleinerung ist es dadurch insbesondere möglich, die Detektorzeile aus einem einzigen, d.h. nicht zusammengesetzten, optoelektronischen Liniendetektor (mit einer grossen Anzahl von Einzelsensoren) aufzubauen.

Die bekannten Scanner dieser letztgenannten Art sind zwar sehr schnell und für Bilderfassungszwecke im allgemeinen völlig ausreichend. Wenn die Bildelemente des Messobjekts jedoch mit hoher Präzision farbmetrisch ausgemessen werden müssen, was bei Anwendungen der Qualitätskontrolle und Druckprozesssteuerung in der Regel unabdingbar ist, dann sind solche Scanner nicht geeignet. Dies liegt einerseits an den bei diesen Scannern auftretenden Übersprecheffekten zwischen der einzelnen Bildelementen und anderseits daran, dass diese Scanner nicht für echte Farbmessung ausgelegt sind. Ein wichtiger Punkt für korrekte Farb- und Dichtemesswerte ist die Einhaltung der normierten Messgeometrie (typisch 45°/0°, z.B. DIN 165361, Teil 2), welche die Beleuchtungs- und Sammelwinkel festlegt und nur kleine Aperturwinkel (typisch <=5°, z.B. DIN 165361, Teil 2) zulässt. Kommerziell erhältliche Bildscanner beider Varianten (CIS und Abbildungsoptik) erfüllen diese geometrischen Messbedingungen nicht.

Im folgenden werden unter" für Farbmessanwendungen standardisierten Einfalls- bzw. Ausfallswinkelbereichen" die erwähnte normierte Messgeometrie und die dazugehörigen, in den einschlägigen Normen festgelegten Winkelbereiche verstanden.

Im folgenden wird die Erfindung anhand der Zeichnung näher erläutert. Es zeigen:

Fig. 1      eine vereinfachte Gesamtansicht eines Ausführungsbeispiels der erfindungsgemässen Abtastvorrichtung,

Fig. 2      einen teilweisen Längsschnitt parallel zur Koordinatenebene y-z durch den Messwagen der Abtastvorrichtung,

Fig. 3      eine Skizze des grundsätzlichen Aufbaus der im Messwagen angeordneten erfindungsgemässen Messeinrichtung,

Fig. 4      ein typisches Spektrum einer weissen LED-Lichtquelle,

Fig. 5      eine Detailskizze der Montage von in der Messeinrichtung eingesetzten Sensorzeilen,

Fig. 6      eine Detailskizze des Aufbaus von in der Messeinrichtung eingesetzten sog. Selfoc-Arrays,

Fig. 7      eine Prinzipskizze eines bevorzugten Ausführungsbeispiels der im Messwagen angeordneten erfindungsgemässen Messeinrichtung,

Fig. 8      Durchlasskurven von typischen geeigneten Farbfiltern,

Fig. 9      ein Prinzipblockschema der Mess- und Steuerelektronik der Abtastvorrichtung,

Fig. 10    eine Prinzipskizze einer ersten Variante eines modularen Aufbaus der Messeinrichtung,

Fig. 11    eine Prinzipskizze einer zweiten Variante eines modularen Aufbaus der Messeinrichtung,

Fig. 12    weitere Durchlasscharakteristiken von typisch eingesetzten Farbfiltern,

Fig. 13    eine Schrägansicht eines Messmoduls der Messeinrichtung von aussen,

Fig. 14    eine aufgeschnittene Schrägansicht des oberen Gehäuseteils des Messmoduls der Fig. 12,

Fig. 15    eine Schrägansicht der Bodenplatte des Messmoduls der Fig. 12,

Fig. 16    eine Schrägansicht der wichtigsten Komponenten des Messmoduls der Fig. 12 ohne Gehäuse,

Fig. 17    eine Schrägansicht einer Sensorleiterplatte mit daran montierten Zeilensensoren des Messmoduls der Fig. 12,

Fig. 18    eine Schrägansicht einer Leuchtdiodenleiterplatte mit daran montierten Leuchtdioden des Messmoduls der Fig. 12,

Fig. 19    eine Schrägansicht einer Filterhalterung mit eingesetztem Farbfilter,

Fig. 20    typische Emissionsspektren von weissen Leuchtdioden,

Fig. 21    ein Ausführungsbeispiel der erfindungsgemässen Abtastvorrichtung mit einem zusätzlichen Spektralmesskopf,

Fig. 22    ein weiteres, besonders bevorzugtes Ausführungsbeispiel der erfindungsgemässen Abtastvorrichtung mit einem zusätzlichen Spektralmesskopf,

Fig. 23    die Messeinrichtung der Abtastvorrichtung der Fig. 22 in einer ersten Bewegungsstellung der in ihr enthaltenen Messmodulgruppen,

Fig. 24    die Messeinrichtung der Abtastvorrichtung der Fig. 22 in einer zweiten Bewegungsstellung der in ihr enthaltenen Messmodulgruppen,

Fig. 25    einen Vertikalschnitt (parallel zur y-z-Koordinatenebene) durch die Messeinrichtung der Figur 21, und

Fig. 26    ein Blockschema zur Messwertumrechnung.

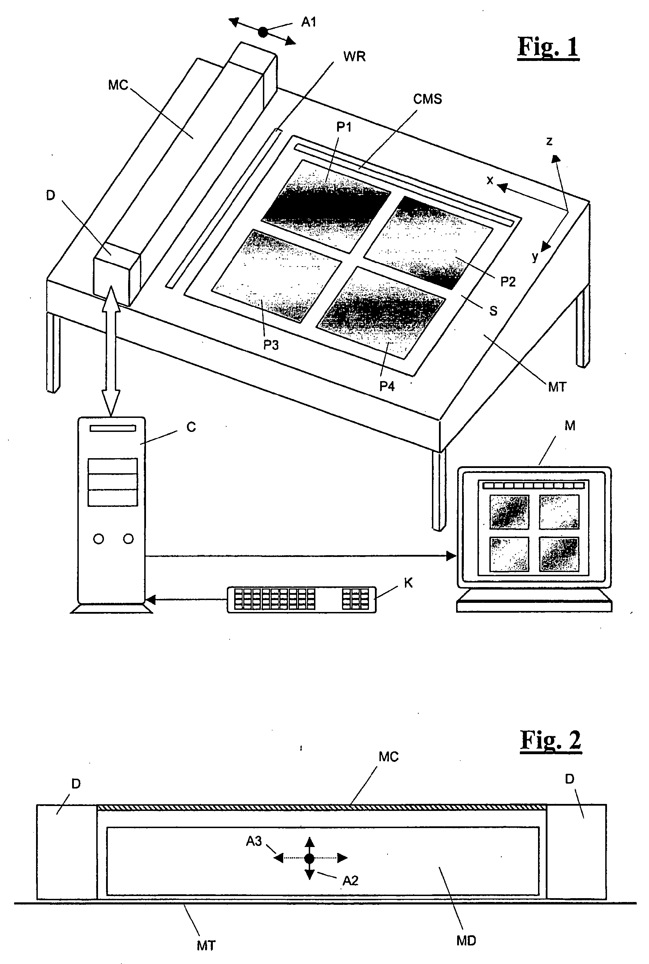

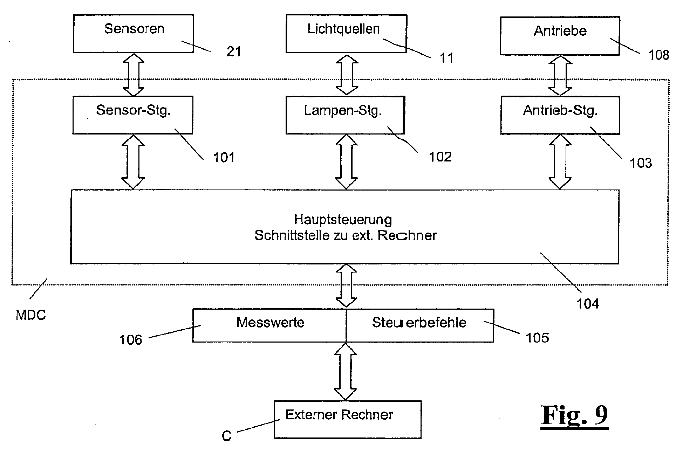

Die erfindungsgemässe Abtastvorrichtung entspricht in ihrem generellen Aufbau den üblichen Messapparaturen, wie sie z.B. in der grafischen Industrie typischerweise zur punktweisen fotoelektrischen Ausmessung von einem Druckprozess entnommenen Druckbögen verwendet werden. Die Abtastvorrichtung umfasst einen Unterbau in Form eines Messtischs MT mit üblicherweise geneigter rechteckiger Oberfläche, auf der das Messobjekt S - der auszumessende Druckbogen - positioniert werden kann. Der Druckbogen S enthält typischerweise einige (hier beispielsweise vier) grafische Darstellungen P1-P4 und einen (oder mehrere) Farbmessstreifen CMS. Zur Positionierung des Messobjekts S sind am Messtisch MT nicht dargestellte Anschläge vorgesehen. Die Fixierung des Messobjekts S auf dem Messtisch MT erfolgt vorzugsweise auf elektrostatischem Wege oder mittels bekannter Saugmechanismen. Auf dem Messtisch MT ist ein länglicher Messwagen MC angeordnet, auf bzw. in dem sich eine Messeinrichtung MD (Fig.2) befindet. Der Messwagen MC erstreckt sich über die Tiefe des Messtischs MT in Koordinatenrichtung y und ist motorisch über dessen Breite in Koordinatenrichtung x linear hin und her beweglich, wobei entsprechende Antriebs- und Steuereinrichtungen am Messwagen MC und am bzw. unter dem Messtisch MT vorgesehen sind. Die Antriebseinrichtung ist in der Zeichnung nur symbolisch durch das Bezugzeichen D angedeutet, die Beweglichkeit des Messwagens MC in x-Richtung durch den Pfeil A1. Innerhalb des Messwagens MC ist die eigentliche Messeinrichtung MD mittels nicht dargestellter konventioneller Antriebseinrichtungen in Richtung der Koordinatenachse z relativ zur Messtischoberfläche heb- und senkbar und in bestimmten Ausführungsvarianten ausserdem noch in Richtung der Koordinatenachse y (beschränkt) verfahrbar. Diese beiden Bewegungsmöglichkeiten sind in Fig. 2 durch die Pfeile A2 und A3 symbolisiert.
Auf dem Messtisch MT befindet sich parallel zum Messwagen MC eine Weissreferenz WR. Diese dient der Kalibrierung der Messeinrichtung MD. Die Kalibrierung wird typischerweise vor jedem Messlauf durchgeführt, indem die Messeinrichtung MD die Weissreferenz ausmisst. Die Weissreferenz wurde zuvor (typischerweise im Werk) mit Hilfe eines externen Gerätes ausgemessen und die Messwerte im Speicher der Abtastvorrichtung, in der Regel im Rechner C, hinterlegt. Eine solche Kalibrierung ist bei Spektralphotometern üblich und als solche Stand der Technik, allerdings wird sie hier, wie weiter unten noch detaillierter erläutert, erfindungsgemäss auch (in y-Richtung) ortsabhängig durchgeführt.
Die Abtastvorrichtung umfasst ferner noch eine Verarbeitun gseinrichtung in Form eines externen Rechners C mit einer Tastatur K und einem Farbmonitor M. Der Rechner C arbeitet mit einer Mess- und Antriebssteuerung MDC (Fig. 9) am Messtisch MT bzw. im Messwagen MC zusammen und verarbeitet die von der im Messwagen MC befindlichen Messeinrichtung MD erzeugten und ihm über die Mess- und Antriebssteuerung MDC zugeführten Messsignale, wobei er unter anderem auch die Bildinformation des abgetasteten Messobjekt S auf dem Monitor M darstellen kann. Der Rechner C kann über die Mess- und Antriebssteuerung MDC ferner auch die Bewegungen des Messwagens MC und der darin befindlichen Messeinrichtung MD veranlassen und steuern. Die Abtastvorrichtung entspricht soweit dem bekannten Stand der Technik, wie er z.B. durch kommerziell erhältliche Geräte der Firma Heidelberger Druckmaschinen AG oder durch die US-A 6,028,682 (entsprechend DE-A-196 50 223) gegeben ist. Der mechanische Aufbau und die Realisierung der motorischen Verfahrbarkeit von Messwagen MC und Messeinrichtung MD sind in der USA 6,028,682 detailliert beschrieben, so dass der Fachmann diesbezüglich keiner weiteren Erläuterung bedarf. Es versteht sich, dass der Messwagen MC auch parallel zur Koordinatenrichtung x angeordnet sein kann, wobei dann alle anderen Ausrichtungen und Bewegungsrichtungen sinngemäss ebenfalls um 90° gedreht wären.

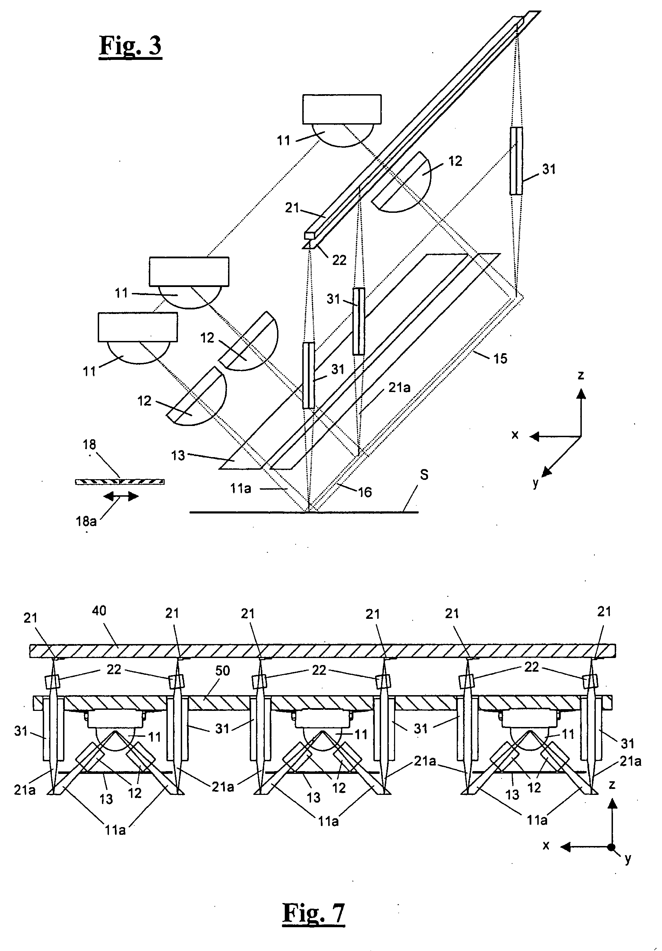

Die Fig. 3 zeigt den prinzipiellen Aufbau der im Messwagen MC befindlichen erfindungsgemässen Messeinrichtung MD. Die Messeinrichtung bildet insgesamt einen (bezüglich Wellenlängenbereichen) mehrkanaligen Zeilen-S canner, wobei in der Fig. 3 der Übersichtlichkeit halber nur die zu einem Farbkanal (Wellenlängenbereich) gehörigen Elemente dargestellt sind. Eine vollständige Messeinrichtung MD mit mehreren Farbkanälen ist z.B. in Fig. 7 skizziert und wird weiter unten noch im Detail erläutert.
Die Messeinrichtung MD bildet den Kern der Erfindung und ist als solche auch in Zusammenhang mit anderen Abtastvorrichtungen oder überhaupt für sich alleine einsetzbar. Beispielsweise kann die erfindungsgemässe Messeinrichtung MD auch an einer Druckmaschine montiert werden, so dass Druckbögen in-line während bzw. unmittelbar nach dem Druck direkt an der laufenden Druckrnaschine ausgemessen werden können.

Die Messeinrichtung MD umfasst als wesentlichste Bestandteile eine Beleuchtungseinrichtung zur Beaufschlagung des Messobjekts mit Beleuchtungslicht, Aufpickoptikmittel zum Auffangen des vom Messobjekt remittierten Messlichts und eine wellenlängenbereichselektive fotoelektrische Empfängereinrichtung zur Umwandlung des remittierten Messlichts in elektrische Messsignale.

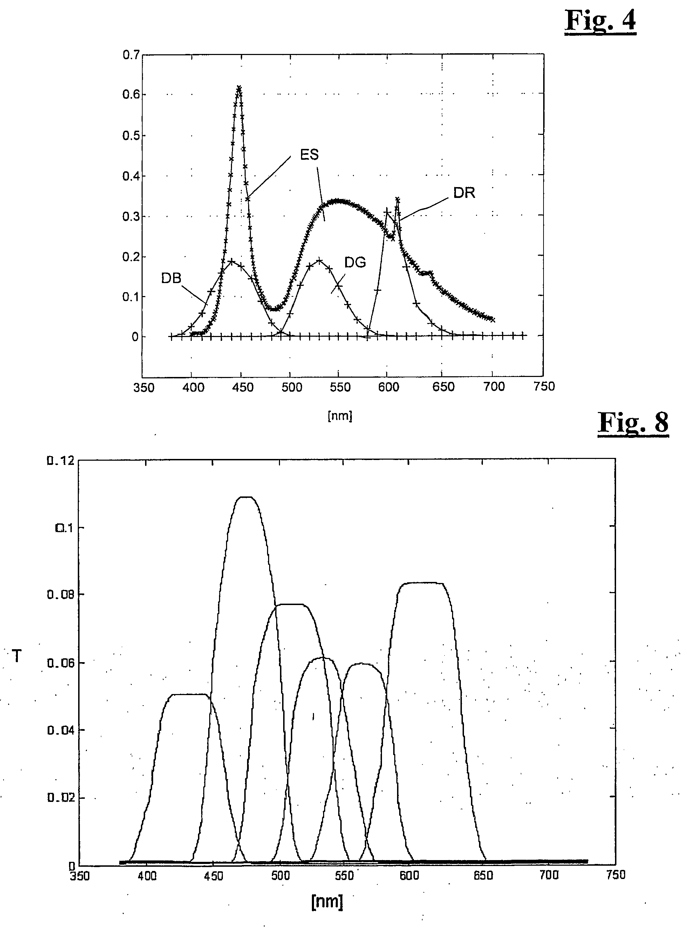

Die Beleuchtungseinrichtung umfasst pro Farbkanal oder, gemäss einem besonders vorteilhaften Ausführungsbeispiel der Erfindung, pro zwei körperlich benachbarte Farbkanäle, eine grössere Anzahl von Lichtquellen 11 in Form von Leuchtdioden, welche in y-Richtung linear aneinandergereiht sind. Sie umfasst ferner vorzugsweise pro Lichtquelle 11 je eine (zylindrische) Kollimatorlinse 12 sowie eine durchgehende, sich in Längsrichtung parallel zur y-Koordinate erstreckende Schlitzblende 13. Die Lichtquellen 11 beaufschlagen das Messobjekt S innerhalb eines in Längsrichtung parallel zur y-Koordinate verlaufenden und sich wenigstens über einen Teil des Messobjekts S erstreckenden Beleuchtungsstreifens 15 mit Beleuchtungslicht. Die Anordnung ist dabei so getroffen, dass jedes innerhalb des Beleuchtungsstreifens 15 liegende abzutastende Bildelement des Messobjekts S unter einem definierten, für die Farbrnessung geeigneten Einfallswinkel (typischerweise 45°/0°, z.B. DIN 165361, Teil 2) mit Beleuchtungslicht beaufschlagt wird. Dies wird durch die Kollimatorlinsen 12 und die Schlitzblende 13 erreicht. Die Kollimatorlinsen 12 erzeugen einen nahezu parallelen Strahlengang. Die Brennweite der Linsen ist so gewählt, dass der Divergenzwinkel des kollimierten Strahlengangs (in y-Richtung) kleiner gleich 5-10° ist. Diese Implementierung ermöglicht eine weitgehend uniforme durchgehende Linienbeleuchtung. Der Beleuchtungsstrahlengang ist in Fig. 3 mit 11a bezeichnet. Die Schlitzblende 13 begrenzt den Einfallswinkel quer zur Längserstreckung des Beleuchtungsstreifens, also in Richtung der x-Achse. Für die Leuchtdioden 11 kann beispielsweise der "weiss" strahlende Typ Luxeon DS 25 der Firma Lumileds Lighting LLC, San Jose, CA, USA eingesetzt werden. Das typische Emissionsspektrum (spektraler Strahlungsfluss) ES solcher Leuchtdioden ist im Diagramm der Fig. 4 dargestellt. Zum Vergleich sind auch die Durchlasscharakteristiken DB, DG, DR von sog. Status E Filtern in das Diagramm eingetragen.

Die fotoelektrische Empfängereinrichtung umfasst (pro Farbkanal) einen Zeilensensor 21 und einen vorgeschalteten Farbfilter 22, welcher den Zeilensensor auf seinen Wellenlängendurchlassbereich sensibilisiert. Der Zeilensensor besteht aus einem oder mehreren sog. CIS-Elementen (contact image sensor), die wiederum je auf einem Chip in einer geraden Zeile integriert eine grosse Anzahl von einzelnen Lichtsensoren enthalten. Ein geeignetes CIS-Element ist z.B. der Typ PI6045J der Firma Peripheral Imaging Corporation, San Jose, CA, USA mit einer Auflösung von 600 dpi.

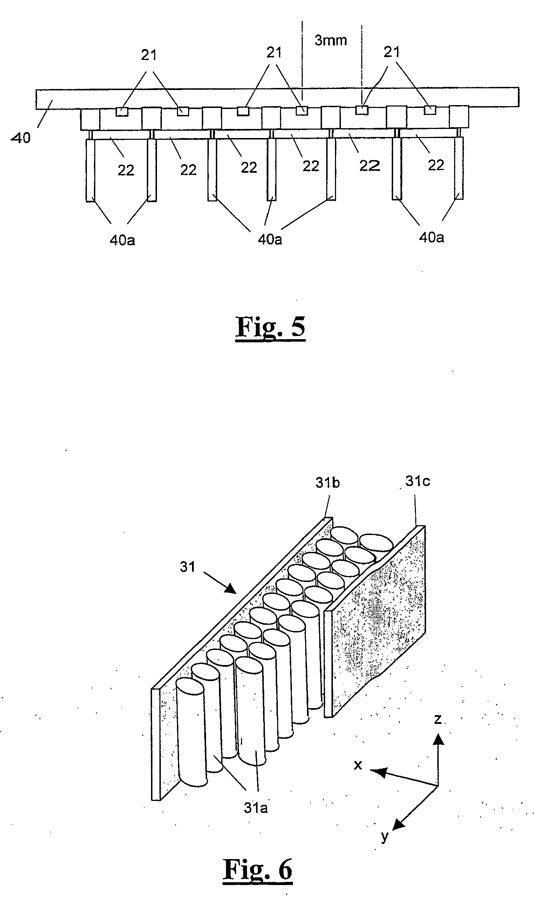

Die Fig. 5 zeigt prinzipiell und schematisch, wie (hier z.B. sechs) Zeilensensoren 21 auf einer gemeinsamen Leiterplatte 40 in einem gegens eitigen Abstand von typisch etwa 3mm montiert sind. Auf der Leiterplatte befestigte Trennwände 40a dienen dabei einerseits als Träger für die Farbfilter 22 und anderseits zur optischen Trennung der Strahlengänge. Die Trennwände 40a können auch direkt bis an die Austrittsfläche der weiter unten noch beschriebenen Selfoc Linsenarrays 31 realisiert werden. Dadurch wird eine optimale optische Trennung der verschiedenen Farbkanäle (Wellenlängen-Messkanäle) ermöglicht.

Alternativ können die Farbfilter 22 direkt auf die Zeilensensoren 21 oder, mit Hilfe von Abstandshaltern, auf die Leiterplatte 40 geklebt werden. Die optische Isolation der einzelnen Räume kann dabei durch Trennwände oder schwarze Vergussmasse erreicht werden. Eine weitere Möglichkeit besteht darin, die Filter direkt oder mit Abstandshaltern auf die Vorder- oder Rückseite der Aufpickoptik zu kleben oder mit anderen bekannten Methoden zu befestigen. Eine weitere Montagemöglichkeit für die Farbfilter 22 besteht darin, diese in einer z.B. rahmenförmigen Filterhalterung zu fixieren und diese Filterhalterung örtlich festzulegen.

Die Aufpickoptikmittel umfassen (pro Farbkanal) eine linienförmige Optikanordnung 31, die vorzugsweise durch eine im wesentlichen lineare Anordnung von Gradientenindex-Linsen, sog. Selfoc-Linsen-Arrays, implementiert ist. Die linienförmige Optikanordnung 31 erstreckt sich wie der Zeilensensor 21 parallel zur y-Koordinatenrichtung. Ein typischer Aufbau eines Selfoc-Linsen-Arrays 31 ist in Fig. 6 gezeigt. Dabei befinden sich zwei Reihen von Gradientenindex-Linsen 31a zwischen zwei äusseren Wänden 31b und 31c, wobei die Zwischenräume zwischen den Linsen-Fasern und den Wänden mit einem opaken Kunststoff vergossen sind. Geeignete Selfoc-LinsenArrays werden von der Firma NSG vertrieben.

Die lineare Optikanordnung 31 lenkt das von den mit Beleuchtungslicht beaufschlagten Bildelementen des Messobjekts S remittierte Messlicht auf den zugeordneten Zeilensensor 21 (Messlichtstrahlengang 21a). Die Optikanordnung 31 ist dabei so ausgebildet und angeordnet, dass sie aus jedem abgetasteten Bildelement das remittierte Messlicht nur unter einem definierten, für Farbmessungen geeigneten Ausfallswinkelbereich auffängt (typischerweise 0° +/- 5°, z.B. DIN 165361, Teil 2). Die (pro Farbkanal) abgetastete Bildelementzeile ist in Fig. 3 mit 16 bezeichnet.

Für die Praxis ist es wichtig, dass die Schlitzblende 13 im Beleuchtungsstrahlengang möglichst nah am Messobjekt S positioniert ist. Die Schlitzblende 13 begrenzt die ausgeleuchtete Fläche auf dem Messobjekt. Sie hat typischerweise eine Öffnungsbreite von 1 mm oder kleiner. Die beleuchtete Fläche des Messobjekts (Beleuchtungsstreifen 15) hat dadurch eine Breite (in x-Richtung), welche kleiner als das Sichtfeld der Optikanordnung bzw. Selfoc-Linsen-Arrays 31 (in x-Richtung) ist. Dies verbessert die Streulichtunterdrückung und ermöglicht Dichtemessungen von kleinen Messfeldern mit hoher Dichte in weissem Umfeld.

Ein grundsätzliches Problem der Linienbeleuchtung besteht darin, dass ein Punkt im Messfeld Licht von allen Lichtquellen (Leuchtdioden) erhält. Dabei trifft das Licht von längs der Linie versetzten Leuchtdioden nicht mehr mit 45°, sondern mit grösseren Winkeln auf das Messfeld. Die grösseren Winkel verstossen aber gegen die normierte Farbmessgeometrie, welche nur Beleuchtungswinkel im Bereich 40° bis 50° (45° +/-5°) zulässt. Abweichungen von der Normgeometrie verursachen Messfehler, welche durch einen unterschiedlichen Oberflächeneffekt und durch andere Absorptionswege durch die Farbschicht verursacht werden.

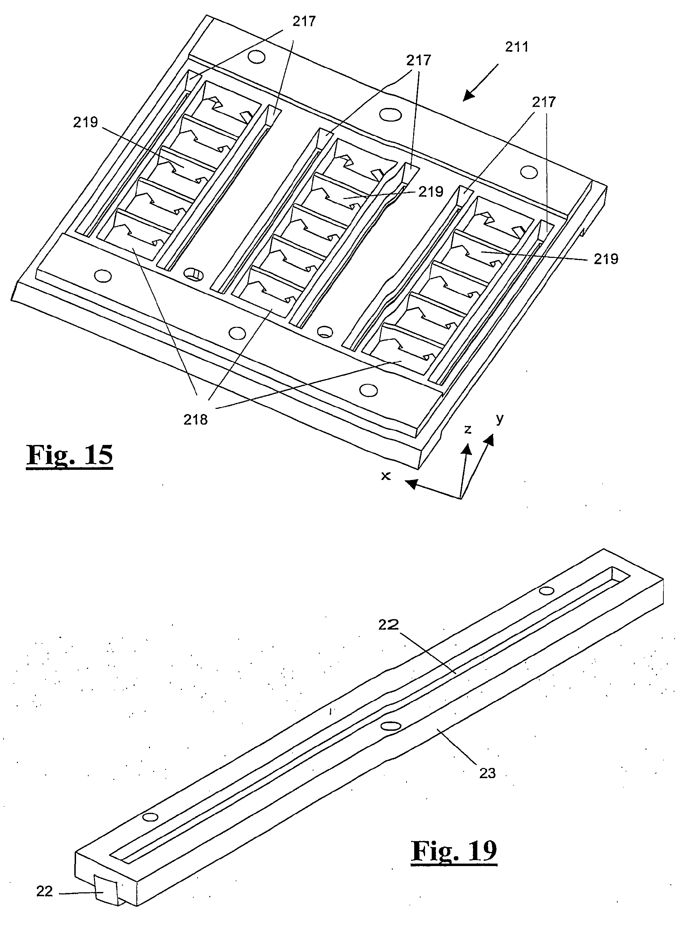

Der effektive Beleuchtungswinkelbereich muss deshalb eingeschränkt werden. Dies kann z.B. mittels einer Lamellenstruktur realisiert werden, welche zwischen den einzelnen Leuchtdioden einer Linie und dem Messfeld angeordnet ist. In der Fig. 15 sind solche Lamellen beispielsweise dargestellt und mit 219 bezeichnet.

Die Lamellen dürfen aber nicht zu gross sein, weil sonst relativ viel Licht verloren geht. Jeder Messpunkt sieht nur das Licht einer einzigen LED im zulässigen Winkelbereich.

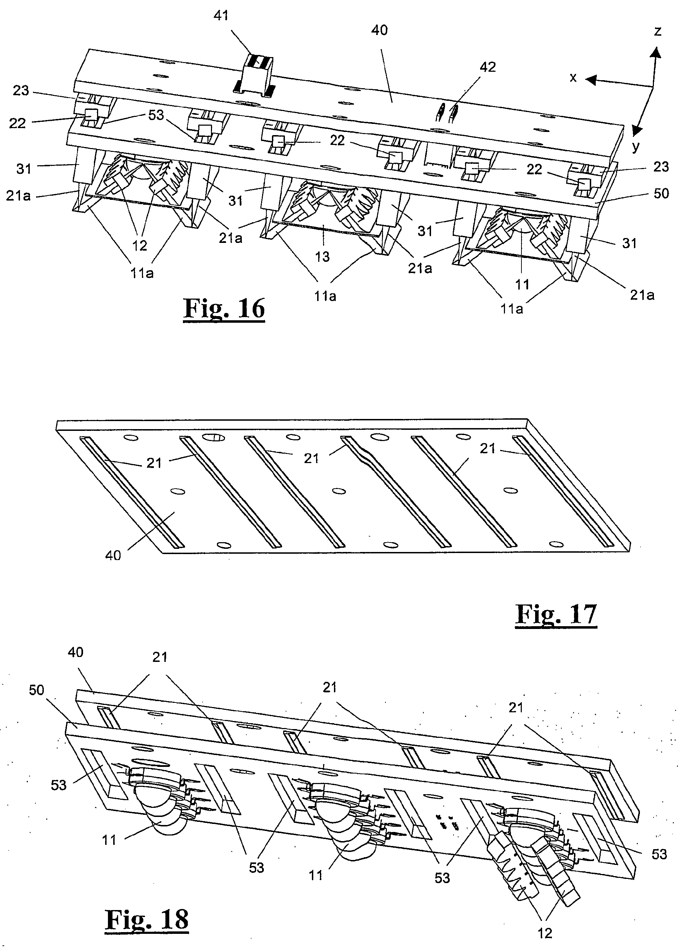

Eine verbesserte Möglichkeit zur Begrenzung der Beleuchtungswinkel gemäss den Anforderungen der Normgeometrie wird nach einem weiteren wichtigen Aspekt der Erfindung durch den Einsatz der schon erwähnten Kollimatorlinsen 12 erreicht, welche längs jeder Leuchtdioden-Linienquelle vorgesehen und vorzugsweise körperlich zu Linsen-Arrays zusammengefasst (mehrere Linsen aus einem einzigen Kunststoffteil) sind. Im Ausführungsbeispiel der Fig. 18 ist die einstückige Ausbildung der Kollimatorlinsen 12 deutlich erkennbar.

Jede Kollimatorlinse 12 eines Linsen-Arrays kollimiert das Licht von hauptsächlich einer Leuchtdiode 11 (oder, bei Verwendung von vielen kleinen Leuchtdioden-Chips, einer räumlich begrenzten Anordnung von mehreren Leuchtdioden-Chips). Die Brennweiten der Kollimatorlinsen 12 sind so gewählt, dass der Divergenzwinkel und die Randwinkel der Beleuchtung des Messfeld in Längsrichtung der Leuchtdioden-Linie (y-Richtung) kleiner als +/- 10° sind. Auf diese Weise wird innerhalb des Beleuchtungsstreifens 15 eine Überlappung und eine homogene Beleuchtungsstärkeverteilung erzielt. Die schon erwähnten Blendenlamellen 219 zwischen den Leuchtdioden 1 1 verhindern, dass Licht einer Leuchtdiode via Linsen einer Nachbar-Leuchtdiode auf das Messobjekt gelangen kann.

Es ist ausreichend, wenn für die Kollimatorlinsen 12 Zylinderlinsen eingesetzt werden, welche die Lichtstrahlen in Längsrichtung der Leuchtdioden-Linie kollimieren. Die Leuchtdioden-Linienlichtquelle hat in der Richtung senkrecht zur Linie eine begrenzte Ausdehnung, so dass in dieser Dimension die Anforderungen der Normgeometrie auch ohne zusätzliche Optik erfüllt sind. Ausserdem begrenzt die Schlitzblende 13 die Breite des Beleuchtungsstreifens 15.

Die Abtastung eines Messobjekts, speziell eines Druckbogens, muss kontaktlos erfolgen. Die Auflagefläche des Bogens ist über die relativ grosse Bogenfläche in der Regel nicht perfekt eben. Es treten deshalb beim Abtasten Abstandsänderungen zwischen dem Messobjekt und der Messeinrichtung auf. Diese dürfen die Messwerte nicht beeinflussen. Dies erfordert, dass die Beleuchtungs- und die Messoptik über den tolerierten Bereich von ein paar Zehntelmillimeter abstandsunabhängig sein müssen.

Das Sichtfeld der Messoptik (Optikanordnung 31) wird von der Beleuchtung überleuchtet (der Beleuchtungsstreifen 15 ist breiter als die Breite der von der Optikanordnung 31 erfassten Abtastlinie 16). Da die Erfassungswinkel der Optikanordnung 31 sehr eingeschränkt sein müssen (gemäss den Farbmessnormen sind nur Erfassungswinkel von +/- 5° tolerierbar), wird mit der Optikanordnung die Leucht- oder Strahldichte im Messfeld gemessen, welche unabhängig vom Abstand ist. Die Beleuchtung muss also nur eine konstante, vom Abstand unabhängige Bestrahlungsstärke erzeugen.

Für eine abstandsunabhängige Beleuchtung unter 45° ist bereits ein Konzept bekannt, bei welchem eine Strahlungsquelle mit Lambertscher Abstrahlcharakteristik parallel zur Ebene des Messfelds angeordnet wird. Die Position der Strahlungsquelle relativ zum Messfeld wird so gewählt, dass das Licht im Winkel von 45° auf das Messfeld trifft. Gemäss dem photometrischen Grundgesetz wird so eine Abstandsunempfindlichkeit über einen für die Praxis ausreichend grossen Abstandsvariationsbereich realisiert. Dieses an sich bekannte Konzept ist, wie aus der Fig. 3 erkennbar, auch bei der vorliegenden Erfindung angewandt.

Zur Ausmessung des Messobjekts in mehreren Farbkanälen ist die Messeinrichtung MD, wie schon erwähnt, mit mehreren Konfigurationen gemäss Fig. 3 ausgestattet. Diese Konfigurationen (Lichtquellen 11, Kollimatorlinsen 12, Schlitzblende 13, Zeilensensor 21, Farbfilter 22, lineare Optikanordnung 31) sind parallel zu einander in geringem gegenseitigem Abstand (in x-Richtung) angeordnet und unterscheiden sich lediglich durch unterschiedliche Farbfilter 22.

Die Figur 7 zeigt den prinzipellen Aufbau einer mit sechs Farbkanälen ausgestatteten Messeinrichtung MD anhand einer stark vereinfachten Schnittdarstellung parallel zur x-z-Koordinatenebene. Die Längsrichtungen (y-Richtung) der linearen Anordnungen von Lichtquellen 11, der Schlitzblenden 12, der Optikanordnung 31, der Farbfilter 22 und der Zeilensensoren 21 erstrecken sich dabei senkrecht zur Zeichenebene. Bei dieser besonders vorteilhaften Ausbildungsform der Erfindung teilen sich jeweils zwei (körperlich) benachbarte Farbkanäle eine Zeile von Lichtquellen 11 und eine Schlitzblende 13. Die Schlitzblenden 13 sind demzufolge als Doppelschlitzblenden mit je zwei Schlitzen ausgestattet. Diese symmetrische Anordnung mit einer gemeinsamen Beleuchtung pro zwei benachbarten Farbkanälen ist in verschiedener Hinsicht vorteilhaft. Einerseits ist sie kostengünstiger, als wenn für jeden Farbkanal eine eigene Beleuchtung vorgesehen wäre. Und anderseits sind die Messbereiche der einzelnen Farbkanäle besser räumlich getrennt. Dies reduziert den Streulichtanteil und ein mögliches Übersprechen zwischen den Farbkanälen, so dass die Messleistung verbessert wird. Ferner lässt die Fig. 7 erkennen, dass die Zeilensensoren 21 an einer gemeinsamen Zeilensensorleiterplatte 40 und die Lichtquellen 11 an einer gemeinsamen Leuchtdiodenleiterplatte 50 montiert sind. Näheres zum mechanischen Aufbau der Messeinrichtung MD wird weiter unten erläutert. Die Beleuchtungs- und Messlichtstrahlengänge sind wiederum mit 11a bzw. 21a bezeichnet.

Die linearen Optikanordnungen 31 und die Zeilensensoren 21 der sechs Farbkanäle sind, wie die Fig. 7 verdeutlicht, in x-Richtung gegeneinander versetzt. Deshalb empfängt jeder der sechs Zeilensensoren 21 zu einem gegebenen Zeitpunkt Messlicht aus unterschiedlichen, in y-Richtung verlaufenden Bildelementzeilen 16 des Messobjekts S. Durch Bewegen des Messwagens MC und damit der Messeinrichtung MD in x-Richtung über das Messobjekt S werden aber alle sechs Zeilensensoren 21 zeitlich sequentiell mit Messlicht aus allen Bildelementzeilen 16 des Messobjekts S beaufschlagt. Wenn die Messeinrichtung MD an einer Druckmaschine montiert ist, ergibt sich die Relativbewegung zwischen Messeinrichtung und Messobjekt durch den unter der Messeinrichtung durchlaufenden Druckbogen.

Im Unterschied zur Bilderfassung stellen Übersprecheffekte bei farbmetrischen und densitometrischen Anwendungen ein grosses Problem dar. Es sind daher besondere Massnahmen bzw. Übersprechdämpfungsmittel erforderlich, um diese Übersprecheffekte so weit wie möglich zu reduzieren.

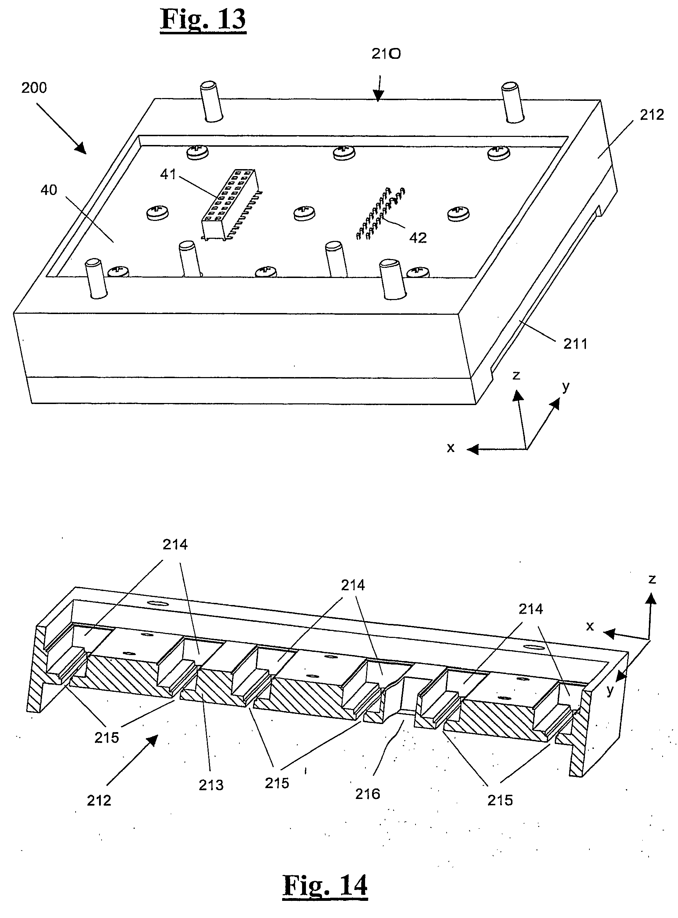

Eine erste Massnahme bzw. ein erstes Mittel besteht darin, dass die Strahlengänge des Messlichts für die einzelnen Farbkanäle gegenseitig abgeschottet werden. Dies kann z.B. durch geeignet angeordnete Trennwände zwischen den einzelnen linienförmigen Optikanordnungen 31 erreicht werden. Diese Trennwände können sich im Prinzip auch bis knapp an die Oberfläche des Messobjekts S erstrecken, so lange sie nicht das zur Beleuchtung der Bildelemente benötigte Licht der Beleuchtungseinrichtung abschatten. Durch die Trennwände wird das Übersprechen zwischen den einzelnen Zeilensensoren bzw. Farbkanälen reduziert. Solche Trennwände werden mit Vorteil auch im detektorseitigen Raum zwischen der Optikanordnungen 31 und den Zeilensensoren 21 bzw. den dazugehörigen Farbfiltern 22 angebracht. Bei der in den Figuren 13-18 dargestellten vorzugsweisen Ausführungsform der Messeinrichtung sind die Trennwände durch Gehäuseteile realisiert. Details sind aus den Figuren 13-18 und den zugehörigen Beschreibungsabschnitten ersichtlich.

Eine andere Übersprechdämpfungsmassnahme besteht darin, dass die Abstände zwischen den Beleuchtungslinien und damit zwischen den Zeilensensoren und Selfoc-Arrays gross genug gewählt wird, so dass gerichteter Oberflächenreflex einer Messlinie nicht auf die Öffnung der Selfoc-Arrays der benachbarten Farbkanäle treffen kann.

Eine weitere Übersprechdämpfungsmassnahme besteht darin, dass die den Zeilensensoren 21 vorgeschalteten Farbfilter 22 etwas schräg gestellt werden, wobei schräg hier eine Drehung aus der x-y-Ebene um die y-A-chsenrichtung bedeutet. Durch diese Schrägstellung wird das Übersprechen in Längsrichtung der Zeilensensoren reduziert. Auch diese Übersprechdämpfungsmassnahme ist aus dem bevorzugten Ausführungsbeispiel der Figuren 13-18 deutlich ersichtlich.

Eine alternative Ausgestaltung der Übersprechdämpfungsmassnahme besteht in der Realisierung eines geeigneten Testmusters, welches auf dem Messtisch MT aufgebracht ist und vom Messwagen MC bzw. der Messeinrichtung MD angefahren bzw. abgetastet werden kann. Das Testmuster wird typischerweise parallel zu dem schon weiter vorne erwähnten, auf dem Messtisch vorhandenen Weissreferenz-Streifen WR (Fig. 1) angebracht. Das Übersprechverhalten der Messeinrichtung MD kann im Betrieb periodisch, vorzugsweise vor jedem Messlauf, durch Abtasten des Testmusters charakterisiert werden. Diese Charakterisierung erfolgt dabei entlang der Messeinrichtung MD, d.h. in y-Richtung ortsabhängig. Da das bezogen auf ein ausgewähltes Bildelement zusammen mit dem eigentlichen informationstragenden Messlicht gemessene Streulicht in seiner Intensität sowohl vom ortsabhängigen Übersprechverhalten der Messeinrichtung MD wie auch von der Bildinformation der benachbarten Bildelemente abhängt, wird für eine rechnerische Kompensation des Übersprechens vorzugsweise beides berücksichtigt. D.h. der Streulichtanteil jedes einzelnen Bildelements wird aufgrund der Bildinformation benachbarter Bildelemente und der ortsabhängigen Charakterisierung der Messeinrichtung MD geschätzt und dann vom dazugehörenden Messwert subtrahiert.

Es versteht sich, dass mit zunehmender Anzahl von Farbkanälen (auf unterschiedliche Wellenlängenbereiche sensibilisierten Zeilensensoren) und gleichzeitig abnehmender Bandbreite der Wellenlängenbereiche eine zunehmend präzise Farbmessung möglich ist. Bei 14-16 Farbkanälen im Abstand von je 20 nm ist die spektrale Auflösung gleich derjenigen klassischer Spektralmessköpfe. Mit zunehmender Anzahl von Farbkanälen steigt aber auch der konstruktive Aufwand und der Rechenaufwand für die Verarbeitung der Messwerte. Umgekehrt ist bei einer zu geringen Anzahl von Farbkanälen keine für die anvisierten Einsatzzwecke ausreichend präzise Farbmessung mehr möglich. Ein optimaler Kompromiss bez. Messgenauigkeit und Herstellkosten liegt gemäss einem Aspekt der Erfindung bei 6-12 Farbkanälen im sichtbaren Bereich plus ev. einem zusätzlichen Kanal im nahen Infrarot-Bereich.

Gemäss einem bevorzugten Ausführungsbeispiel sind für den sichtbaren Bereich des Spektrums sechs Farbkanäle, also sechs Zeilensensoren mit jeweils einem vorgeschalteten Farbfilter vorgesehen. Vorzugsweise haben dabei drei der sechs Farbfilter die Durchlasscharakteristiken der für Farbdichtemessungen genormten Farbdichtefilter, die drei anderen Farbfilter werden hinsichtlich der Genauigkeit der Farbmessung optimiert. Die typischen Durchlasskurven dieser sechs Farbfilter sind im Diagramm der Fig. 8 dargestellt. Sie haben Bandpass-Charakteristik und typische Halbwertsbreiten von 30 nm bis 60 nm. Es liegen somit nach der Abtastung für jedes Bildelement des Messobjekts sechs Abtastwerte vor, aus denen alle interessierenden weiteren Daten z.B. im externen Rechner C errechnet werden können. Die Farbdichten liegen unmittelbar als Abtastwerte in den drei mit den Farbdichtefiltern ausgestatteten Farbkanälen vor.

Für manche Anwendungen ist es erforderlich, auch eine Abtastung im nahen Infrarotbereich durchzuführen. Demzufolge kann die erfindungsgemässe Messeinrichtung auch mit einem Infrarotkanal ausgestattet sein. Dazu ist einem der Zeilensensoren ein IR-Filter vorgeschaltet. Da weiss strahlende Leuchtdioden in der Regel keinen ausreichenden IR-Anteil aufweisen, muss für diesen Fall eine zusätzliche IR-Lichtquelle in Form einer linearen Anordnung von IR-Leuchtdioden vorgesehen sein. Alternativ kann in der linearen Leuchtdioden-Anordnungen eines Farbkanals auch eine Mischung von weiss und IR strahlenden Leuchtdioden vorgesehen sein. Näheres dazu ist weiter unten noch erläutert.

In der Fig. 9 ist die Mess- und Antriebssteuerung MDC der Abtastvorrichtung in Form eines groben Blockschemas dargestellt. Sie umfasst eine Sensorsteuerung 101, eine Lampensteuerung 102 und eine Antriebssteuerung 103 sowie eine Hauptsteuerung 104, die mit den anderen drei Steuerungen zusammenarbeitet und gleichzeitig auch die Verbindung zum externen Rechner C herstellt. Die Sensorsteuerung 101 liest die Messwerte aus den Zeilensensoren 21 aus, die Lampensteuerung 102 steuert die Lichtquellen 11 in der Beleuchtungseinrichtung, und die Antriebssteuerung 103 steuert Antriebsmotoren 108 für die Bewegung des Messwagens MC bzw. der darin befindlichen Messeinrichtung MD in die drei Bewegungsrichtungen x, y, und z. Die Hauptsteuerung 104 koordiniert und kontrolliert die drei übrigen Steuerungen auf einer übergeordneten Ebene und stellt gleichzeitig auch die Verbindung zum externen Rechner C her. Die Hauptsteuerung 104 nimmt vorn externen Rechner C Steuerbefehle 105 entgegen und sendet dem externen Rechner die von den Zeilensensoren 21 erzeugten (digital aufbereiteten) Messwerte 106. Die Mess- und Antriebssteuerung MDC ist funktionell im Prinzip gleich wie bei den kommerziell erhältlichen Abtastgeräten dieser Art, wobei sich die für die Ansteuerung der Zeilensensoren 21 und Leuchtdioden 11 erforderlichen spezifischen Funktionen unmittelbar aus den Datenblättern der Hersteller dieser Elemente ergeben. Der Fachmann bedarf daher für die Implementierung der Mess- und Antriebssteuerung MDC keiner näheren Erläuterung.

In den vorstehenden Ausführungsbeispielen erstreckt sich die Messeinrichtung MD über die gesamte Höhe (y-Richtung) des Messobjekts. Da Druckbögen üblicherweise relativ gross sind, kann die Länge der Messeinrichtung in y-Richtung bzw. die Länge der Zeilensensoren 21, Farbfilter 22 und linearen Optikanordnungen 31 dabei leicht 80 cm und mehr betragen. Die Herstellung so langer Zeilensensoren, Farbfilter und Optikanordnungen ist aber technisch sehr aufwändig.

Eine Möglichkeit, diese Schwierigkeit zu umgehen, besteht darin, die Länge (in y-Richtung) der Messeinrichtung MD grundsätzlich kürzer zu wählen als den zu überstreichenden Abtastbereich in y-Richtung. In diesem Fall würde die Abtastung des ganzen Messobjekts in zwei oder mehreren Abtastdurchgängen (Bewegungen des Messwagens MC und damit der Messeinrichtung MD in x-Richtung über das Messobjekt) erfolgen, wobei die Messeinrichtung MD im Messwagen MC für jeden Abtastdurchgang entsprechend in y-Richtung versetzt würde.

Gemäss einem weiteren Aspekt der Erfindung wird dieses Problem aber vorzugsweise dadurch gelöst, dass die Messeinrichtung MD modular aufgebaut ist, das heisst aus einer Anzahl von im wesentlichen baugleichen, in y-Richtung relativ kurzen Messmodulen zusammengesetzt ist, welche je für sich alle Elemente der Messeinrichtung aufweisen und in ihrer Gesamtheit den in y-Richtung zu überstreichenden Abtastbereich vollständig abdecken. Die Messmodule können (in y-Richtung) beispielsweise etwa 50 mm lang sein, und die gesamte Messeinrichtung kann beispielsweise 16 Module umfassen.

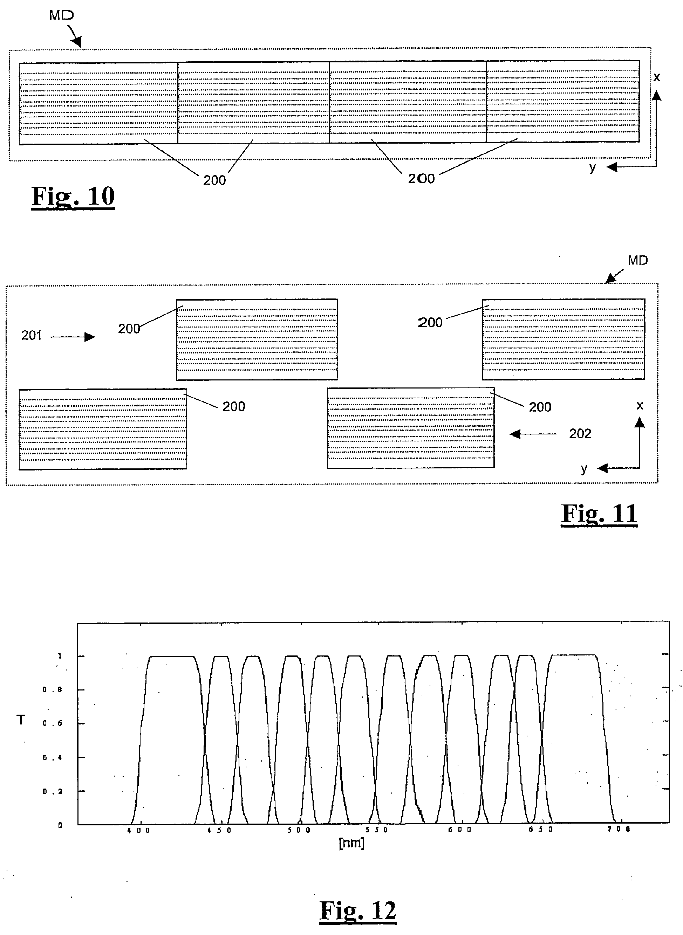

In den Figuren 10 und 11 sind zwei Varianten einer hier rein beispielsweise aus nur vier Messmodulen bestehenden Messeinrichtung MD schematisch dargestellt. Die strichlierten Streifen innerhalb der Messmodule symbolisieren die (hier beispielsweise wieder sechs) Farbkanäle jedes Moduls.

In Fig. 10 sind die vier Messmodule 200 der Mes seinrichtung MD (in y-Richtung) nahtlos aneinandergefügt. Die nahtlose Aneinanderreihung kann aber technisch problematisch sein, weil an den Fügestellen leicht Abtastlücken entstehen können. Deshalb sind im bevorzugten Beispiel der Fig. 11 die Messmodule 200 in zwei Gruppen 201 und 202 aufgeteilt, welche zwei in x-Richtung parallele gerade Reihen bilden. Die Messmodule 200 der beiden Gruppen 201 und 202 stehen gegenseitig auf Lücke und überlappen sich in x-Richtung geringfügig. Durch diese Überlappung werden Abtastlücken vermieden und ergeben sich weniger scharfe Anforderung an die Präzision der Konstruktion. Allerdings wird dadurch aber der Steuerungsaufwand grösser, weil die Sensorzeilen der Messmodule der beiden Gruppen jeweils zeitlich versetzt über ein und derselben Bildelementzeile des Messobjekts stehen.

Die einzelnen Messmodule 200 der Messeinrichtung MD sind normalerweise baugleich. Es ist aber gemäss einem weiteren Aspekt der Erfindung auch möglich, in der Messeinrichtung MD Messmodule mit unterschiedlichen Farbkanälen einzusetzen, um so die Gesamtzahl der Farbkanäle zu erhöhen. Dazu ist lediglich der Einsatz unterschiedlicher Farbfilter erforderlich. Beispielsweise könnte etwa bei der Ausführung gemäss Fig. 10 jedes ungerade Messmodul 200 sechs erste Farbkanäle und jedes gerade Messmodul 200 sechs von den ersten verschiedene zweite Farbkanäle aufweisen. Analog könnten bei der Ausführung nach Fig. 11 die Messmodule 200 der einen Gruppe 201 sechs erste Farbkanäle und die Messmodule 200 der anderen Gruppe 202 sechs von den ersten verschiedene zweite Farbkanäle aufweisen. Für die gesamte Messeinrichtung MD ergäbe dies dann in beiden Varianten eine farbliche Auflösung von zwölf Farbkanälen. In diesem Fall würde die vollständige Abtastung des Messobjekts natürlich zwei Abtastdurchgänge erfordern, wobei die Messeinrichtung MD jeweils um im wesentlichen eine Modullänge in y-Richtung versetzt werden müsste.

Die Figur 12 zeigt die spektrale Verteilung der Messfilter für den Fall von 12 verschiedenen Farbfiltern bzw. Farbkanälen. Dabei werden im relevanten Messbereich 450 nm bis 640 nm 10 verschiedene Farbfilter mit 20 nm Halbwertsbreite verwendet. Diese Auflösung entspricht der Anforderungen für die spektrale Farbmesstechnik in den Normen (CIE15.3 oder DIN 5033). In den Randbereichen, wo die Normalbeobachterfunktionen klein sind, werden breitere Filter gewählt, da in diesen Bereichen keine großen Farbdifferenzen entstehen. Drei Farbfilter werden speziell für die Dichtemessung genau nach dem Dichte-Standard ISO Status I aus der Norm ISO 5 gewählt. Die Farbfilter sind in der nachstehenden Tabelle mit ihrer Zentrumswellenlänge ZWL und der Halbwertsbreite HWB spezifiziert.

|  | 1 | 2 | 3 | 4 | 5 | 6 | 7 | 8 | 9 | 10 | 11 | 12 |
|---|---|---|---|---|---|---|---|---|---|---|---|---|
| ZWI [nm] | 420 | 450 | 470 | 495 | 515 | 535 | 560 | 580 | 600 | 625 | 640 | 670 |
| HWB [nm] | 40 | 20 | 20 | 20 | 20 | 20 | 20 | 20 | 20 | 20 | 20 | 40 |

Diese Filterauswahl ermöglicht mit einer reduzierten Anzahl von Farbfiltern eine gute Messleistung für die Farb- und Dichtemessung von gedruckten Proben, welche equivalent zu einer spektralen Messtechnik ist.

Die Filterauswahl bzw. Anordnung für die Messmodule 200 kann auch so vorgenommen sein, dass gewisse Farbkanäle (Farb filter) in allen Messmodulen vorhanden sind. Beispielsweise kann in jedem Messmodul 200 je ein Rot-, ein Grün- und ein Blaufilter vorgesehen sein, wobei diese Rot-, Grün- und Blau-Farbfilter aber nicht nicht identisch, sondern nur spektral möglichst benachbart sind. Bei sechs Farbkanälen pro Modul ergibt dies dann insgesamt wieder eine Farbauflösung von zwölf Farbkanälen. Diese Auslegung der Farbkanalverteilung ermöglicht mit einer einzigen Abtastbewegung (z.B. Hinlauf des Messwagens) das gesamte Messobjekt in den in allen Messmodulen vorhandenen Farbkanälen abzutasten. Diese Abtastwerte können dann z.B. zur Anzeige eines (farblich nicht 100% exakten) Vorschaubilds herangezogen werden.

Nachstehend wird anhand der Figuren 13-19 der Aufbau eines hier beispielsweise wieder für 6 Farbkanäle ausgelegten Messmoduls 200 im Detail beschrieben. Es versteht sich, dass die Messmodule auch für mehr oder weniger Farbkanäle ausgelegt sein können. Das beschriebene Messmodul 200 entspricht in seiner Konfiguration der Fig. 7.

Wie am besten aus der Gesamtansicht der Fig. 13 ersichtlich, besitzt das Messmodul 200 ein Gehäuse 210, in welchem alle optischen und elektrischen Komponenten angeordnet sind. Das Gehäuse 210 besteht aus Metall und dient auch gleichzeitig als Kühlkörper zur Wärmeabfuhr. Das zweiteilige Gehäuse 210 umfasst im wesentlichen eine Bodenplatte 211 und einen mit dieser verbundenen Oberteil 212.

Die Fig. 16 zeigt die Gesamtheit der im Gehäuse 210 untergebrachten Funktionselemente des Messmoduls 200 inkl. Beleuchtungs- und Messstrahlengänge 11 a bzw. 21a. Man erkennt zwei parallele Leiterplatten 40 und 50, an denen alle elektrischen Komponenten befestigt sind. Die in der Zeichnung obere Zeilensensorleiterplatte 40, die gleichzeitig das Gehäuse 210 nach oben abschliesst, trägt an ihrer Unterseite (Fig. 17) sechs Zeilensensoren 21 der schon weiter vorne erwähnten Bauart (CIS-Elemente). Die Zeilensensoren 21 sind parallel angeordnet und erstrecken sich in y-Richtung. An der Oberseite der Zeilensensorenleiterplatte 40 befindet sich ein Steckanschluss 41, über den das Messmodul 200 elektrisch mit der weiter oben erläuterten Mess- und Antriebssteuerung MDC verbunden werden kann. Ferner sind Steckerstifte 42 erkennbar, die in einen auf der darunterliegenden Leuchtdiodenleiterplatte 50 vorgesehenen Steckanschluss 52 eingreifen und so die elektrische Verbindung zur Leuchtdiodenleiterplatte 50 herstellen. An der Unterseite der Leuchtdiodenleiterplatte 50 sind als Lichtquellen drei parallele, sich in y-Richtung erstreckende Reihen von (hier z.B. je fünf) Leuchtdioden 11 in gutem thermischen Kontakt montiert (Fig. 18).

In der Fig. 16 sind weiter sechs linienförmige, sich in y-Richtung erstreckende Anordnungen von Kollimatorlinsen 12, drei sich in y-Richtung erstreckende Doppelschlitzblenden 13, sechs sich in y-Richtung erstreckende lineare Optikanordnungen 31 (Selfoc-Linsen-Arrays) und sechs in Filterhalterungen 23 gefasste, sich in y-Richtung erstreckende Farbfilter 22 erkennbar. Die Farbfilter 22 sind um die y-Achse leicht verdreht angeordnet, um Übersprecheffekte zu vermindern - siehe dazu die Ausführungen weiter oben. Die Kollimatorlinsen 12 sind in Kavitäten der Bodenplatte 211 des Gehäuses 210 angeordnet und fixiert. Die linearen Optikanordnungen 31 sind in Schlitzen 53 der Leuchtdiodenleiterplatte 50 befestigt und ebenfalls in passend geformten Kavitäten der Bodenplatte 211 angeordnet. Die Doppelschlitzblenden 13 sind an der Unterseite der Bodenplatte 211 des Gehäuses 210 montiert. Die rahmenförmigen Filterhalterungen 23 mit den darin gefassten Farbfiltern 22 sind in passend geformten Kavitäten des Gehäuseoberteils 212 angeordnet und fixiert.

Wie die Fig. 14 zeigt, ist das Gehäuseoberteil 212 im wesentlichen rahmenförmig ausgebildet und besitzt eine relativ dicke Zwischenwand 213, die mit sechs langgestreckten, in y-Richtung verlaufenden Kavitäten 214 sowie sechs langgestreckten, ebenfalls in y-Richtung verlaufenden Schlitzen 215 versehen ist. Die Kavitäten 214 dienen zur Aufnahme der genannten, in Fig. 19 im Detail dargestellten Filterhalterungen 23 mit den darin gefassten Farbfiltern 22. Die Schlitze 215 dienen zum Durchtritt der Strahlengänge 21 a des Messlichts zwischen den linearen Optikanordnungen 31 und den Zeilensensoren 21. Die Zeilensensorleiterplatte 40 und die Leuchtdiodenleiterplatte 50 sind (im zusammengebauten Zustand des Messmoduls) auf bzw. unterhalb der Zwischenwand 213 montiert. Die Leuchtdiodenleiterplatte 50 besteht aus einem gut wärmeleitenden Material und führt die von den Leuchtdioden erzeugte Wärme in das Gehäuse 210 ab. Eine weitere Kavität 216 gibt Raum für den Steckanschluss 52 auf der Leuchtdiodenleiterplatte 50.

Die in Fig. 15 gezeigte Bodenplatte 211 weist sechs parallele, sich in y-Richtung erstreckende Schlitze 217 und drei längliche, sich in y-Richtung erstreckende Fenster 218 auf. Die Schlitze 217 dienen zum Durchtritt der Strahlengänge 21 a des von den Abtastzeilen des Messobjekts remittierten Messlichts zu den linearen Optikanordnungen 31 hin. Die Fenster 218 bieten Raum für die genannten sechs Reihen von Kollimatorlinsen 12 und sind an ihrer Unterseite, als zum Gehäuseäusseren hin, durch die drei Doppelschlitzblenden 13 abgeschlossen (in Fig. 15 nicht dargestellt). Zur Reduktion von Streulichteffekten in Längsrichtung (y-Richtung) sind in den Fenstern 218 jeweils vier Blendenlamellen 219 angeordnet, die jeweils zwischen zwei Leuchtdioden 11 zu liegen kommen.

Durch die Anordnung der Komponenten des Messmoduls in Kavitäten der Bodenplatte 211 bzw. des Gehäuseoberteils 212 wird eine gute optische Trennung der einzelnen Farbkanäle erreicht, so dass es nicht zu Übersprecheffekten zwischen den einzelnen Farbkanälen kommen kann.

In dem in den Figuren 13-18 gezeigten Ausführungsbeispiel werden Lichtquellenlinien verwendet, die (pro Linie) aus 5 kommerziell erhältlichen weissen high-power Leuchtdioden (LEDs) bestehen, welche im Abstand von 10 mm auf der Leuchtdiodenleiterplatte 50 in gutem thermischen Kontakt angebracht sind. Die eingesetzten Leuchtdioden 11 sind in normalen Gehäusen in "surface mount" Technologie (SMT) bestückte weisse 1W LEDs mit Lambertscher Abstrahlcharakteristik des Herstellers Lumileds. Mit fünf dieser relativ grossen Leuchtdioden kann eine Abtastlinie von 50 mm Länge ausreichend gleichmässig ausgeleuchtet werden. Durch die Doppelschlitzblenden 13 und die Kollimatorlinsen 12 ist dafür gesorgt, dass das Messobjekt im Bereich der vom Messmodul erfassten Abtaststreifen normgerecht (Einfallswinkel 45° +/- 5°) und ausreichend homogen beleuchtet wird.

Anstelle weniger grosser Leuchtdioden kann aber auch eine grössere Anzahl kleinerer Leuchtdioden eingesetzt werden, die ebenfalls auf der Leuchtdiodenleiterplatte 50 angeordnet sind. Z.B. können pro Lichtquellenlinie je 20 Stück kleine low-power Leuchtdioden in "chip on board" Technologie (COB) eingesetzt werden. Im Speziellen können auch viele kleine low-power LEDs mit COB Technologie auf kleinem Raum bestückt werden. Es können sogenannte LED Clusters gebildet werden. Dies ermöglicht von der Fläche her eine äquivalente Lichtquelle zu den high-power LED Chips. In dieser Anordnung können auch verschiedene LED Typen mit unterschiedlichen spektralen Emissionswellenlängen kombiniert werden (siehe auch die Ausführungen weiter unten).

Für die praktische Realisierung ist es vorteilhaft, dass die Zeilensensoren 21 für alle Aufpickkanäle (hier sechs) auf der gemeinsamen Zeilensensorleiterplatte 40 in einem konstanten Abstand zur Messebene angeordnet sind, so wie dies in der Zeichnung dargestellt ist. Die für die linearen Optikanordnungen 31 eingesetzten Selfoc-Linsen-Arrays haben aber chromatische Aberratiomen, so dass die scharfe Bildebene in Funktion der Wellenlänge longitudinal (z-Richtung) verschoben ist. Die typischerweise verwendeten GRIN Linsenarrays vom Typ SELFOC von Nippon Sheet Glass, Japan haben typische chromatische Längsaberrationen im Bereich von 0.4 bis 0.8 mm über den spektralen Arbeitsbereich.

Zur Lösung dieses Problems sind die Optikanordnungen bzw. Selfoc-Linsen-Arrays 3 lin z-Richtung leicht versetzt eingebaut, so dass messobjektseitig der für die Wellenlänge des Aufpickkanals optimale Arbeitsabstand erzielt wird. Auf der Bildseite (Zeilensensorseite) der Selfoc-Linsen-Arrays 31 wird der optische Wegunterschied dadurch aufgefangen, dass bei den kurzen Wellenlängen gegenüber den langen Wellenlängen dickere Farbfilter eingesetzt werden. Die notwendige Dickenänderung berechnet sich nach der bekannten Formel für den Defokus durch eine planparallele Platte, wie dies in jedem Optik-Fachbuch beschrieben ist.

Aus Kostengründen wäre es wünschenswert, mehrere Spektralkanäle (Wellenlängenbereiche) unter Verwendung nur eines Aufpickkanals, also ein und derselben Optikanordnung (Selfoc-Linsen-Arrays) 31 und ein und desselben Zeilensensors 21 zu messen. Besonders interessant wäre es, den für die Drucktechnik im Bereich zwischen 850nm und 950nm liegenden Infrarot-Bereich mit der Messung eines anderen Wellenlängenbereichs (Farbkanals), beispielsweise mit Zentrumswellenlänge bei 420 nm und Halbwertsbreite von 40 nm, zu kombinieren. Für die eingesetzten Zeilensensoren ist es kein Problem, diese unterschiedlichen Wellenlängenbereiche mit demselben Sensor zu erfassen, da zahlreiche handelsübliche silizium-basierte Sensoren eine durchgehend gute Sensivität im Bereich 400nm bis 950nm aufweisen.

Gemäss einem weiteren Aspekt der Erfindung wird diese Kombination nun dadurch realisiert, dass das Messobjekt abwechslungsweise mit Licht der beiden zu kombinierenden Wellenlängenbereiche beleuchtet wird und die Messungen der beiden Wellenlängenbereiche (Farbkanäle) im Zeitmultiplexverfahren ineinander verschachtelt werden.

Das Beleuchtungslicht wird dabei abwechslungsweise an den einen Farbkanal (z.B. Licht einer blauen LED) bzw. an den anderen Farbkanal (z.B. Licht einer IR-LED) angepasst. Voraussetzung dafür ist natürlich, dass die betreffende Leuchtdioden-Linie mit unterschiedlichen Leuchtdioden mit den erforderlichen Emissionscharakteristiken bestückt ist und dass die unterschiedlichen Leuchtdioden selektiv ansteuerbar sind. Letzteres kann wieder durch die schon erwähnte Mess- und Steuereinrichtung MDC erfolgen.

Diese alternierende Zweifach-Beleuchtung wäre im Prinzip ohne zusätzliche Filter realisierbar. Da aber für die hier vorgesehenen Anwendungen eine präzise densitometrische und colorimetrische Messungen gefordert ist und die Leuchtdioden nie ein scharf begrenztes Beleuchtungsspektrum aufweisen, muss die geforderte Bandpass-charakteristik durch optische Bandpassfilter gewährleistet werden. Dazu wird gemäss einem weiteren Aspekt der Erfindung das dem betreffenden Zeilensensor 21 zugeordnete Farbfilter 22 als Doppelbandpassfilter ausgebildet. Ein solches Doppelbandpassfilter transmittiert beispielsweise zwischen 400 nm-440 nm und 850 nm-950 nm möglichst ideal und sperrt im restlichen Bereich des interessierenden Spektrums (z.B. zwischen 380 nm und 1000 nm). Es ist auch möglich, ein Doppelbandpassfilter mit folgender Charakteristik einzusetzen: Transmission unterhalb 440 nm und überhalb 850 nm und Sperrung zwischen 440 nm und 850 nm. Das Doppelbandpassfilter ist vorzugsweise als reines Interferenzfilter realisiert.

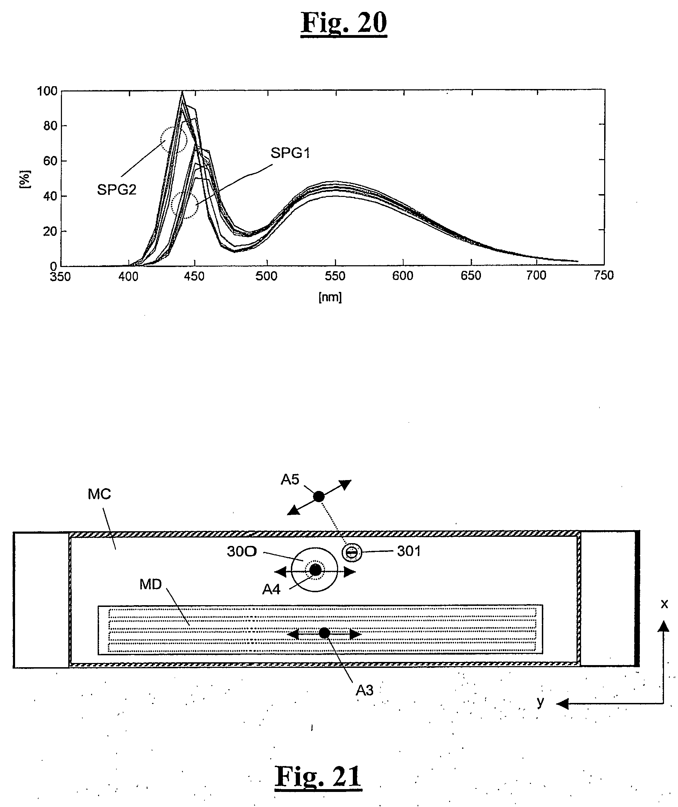

Das Spektrum sog. "phosphor-converted" weisser Leuchtdioden (z.B. Leuchtdioden der Firma Lumileds, USA) setzt sich aus zwei Teilen zusammen: Dem kurzwelligeren Teil, der direkt durch das LED Halbleiter Material entsteht, und dem langwelligeren Teil, der indirekt durch den Phosphor entsteht. Das Licht des Halbleiters, der sog. Pump-LED, ist typischerweise im UV oder tiefen Blau des Spektrums und relativ schmalbandig (typisch schmaler als 100 nm). Der vom Phosphor emittierte Lichtteil erstreckt sich von Blau bis Rot und ist breitbandiger (typisch 100 nm bis 200 nm). Figur 20 zeigt typische Emissionsspektren solcher weisser LEDs.

Solche Leuchtdioden sind für densitometrische und farbmetrische Messgeräte und im speziellen für Spektralfotometer prinzipiell als Lichtquelle geeignet. Problematisch sind aber mehrere Aspekte, von denen die zwei wichtigsten die folgenden sind: Zwischen dem Lichtteil der Pump-LED und dem Lichtteil des Phosphors ergibt sich typischerweise ein spektrales Loch. D.h. die relative Intensität ist in diesem Wellenlängenbereich gegenüber dem Rest des Spektrums massiv geringer (siehe Fig. 20). Ein zweites Problem ist, dass die Zentrumswellenlänge der Pump-LED einer grossen Exemplarstreuung unterliegt. Die Hersteller der Leuchtdioden messen deshalb oft jede einzelne produzierte Leuchtdiode aus und sortieren diese dann nach gewissen Kriterien, beispielsweise nach der Lage der Zentrumswellenlänge des Lichts der Pump-LED. Zu bemerken ist, dass, im Gegensatz zum Licht des Halbleiters, das Licht des Phosphors, was die Lage des Spektrums angeht, praktisch keiner Exemplarstreuung unterliegt.

Für die Farbmesstechnik ist das Spektrum im Bereich 400 nm bis 700 nm wichtig. Um gute Messgenauigkeit zu erreichen, muss mindestens in diesem Bereich überall genügend Licht vorhanden sein. Vor diesem Hintergrund ergeben sich im Zusammenhang mit den vorher genannten Problemen für die Messtechnik zwei Schwierigkeiten. Liegt einerseits die Zentrumswellenlänge der blauen Pump-LED eher bei kurzen Wellenlängen (z.B. bei 430 nm), so hat man zwar selbst bei 400 nm noch genügend Licht, die Delle im Spektrum (zwischen Halbleiter-Licht und Phosphor-Licht) wird aber wegen der spektral unveränderten Lage des Phosphor-Lichts ausgeprägter und man hat damit in diesem Bereich (ca. zwischen 450 nm und 500 nm) wenig Licht. Wenn anderseits die Zentrumswellenlänge der Pump-LED eher gegen längere Wellenlängen hin verschoben ist, ist diese Delle zwar wesentlich weniger ausgeprägt, dafür ist aber bei kurzen Wellenlängen, insbesondere zwischen 400 nm und 430 nm, nicht mehr viel Licht vorhanden. In einem solchen Fall lässt sich beispielsweise die densitometrische Dichte der Prozessfarbe Gelb nicht mehr vernünftig bestimmen. Diese beiden Fälle sind in den beiden Spektrengruppen SPG1 und SPG2 der Fig. 20 zu erkennen.

Lösen lassen sich diese Probleme gemäss einem weiteren Gedanken der Erfindung wie folgt: Die verfügbaren Leuchtdioden werden durch Sortieren nach ihren Emissionsspektren in zwei Gruppen entsprechend den Spektrengruppen SPG1 und SPG2 der Fig. 20 eingeteilt. Die eine Gruppe hat die Zentrumswellenlänge der Pump-LED eher bei kürzeren Wellenlängen (z.B. bei 430 nm), die andere eher bei längeren Wellenlängen (z.B. bei 450 nm). Nun können Leuchtdioden beider Gruppen zu einer Beleuchtung zusammengesetzt werden, wobei für die Farbkanäle je nach Farbfilter Leuchtdioden der einen oder der anderen Gruppe so gewählt werden, dass die obengenannten Probleme nicht mehr auftreten. D.h. dass beispielsweise für das Farbfilter mit Zentrumswellenlänge bei 420 nm Leuchtdioden der einen Gruppe und für das Farbfilter mit Zentrumswellenlänge bei 470 nm Leuchtdioden der anderen Gruppe eingesetzt werden. Das ganze lässt sich sinngemäss auch mit mehr Gruppen in feinerer Aufteilung realisieren.

Gemäss einem weiteren wichtigen Aspekt der Erfindung kann die Messeinrichtung MD zusätzlich zu den Zeilensensoren noch einen unabhängigen Spektralmesskopf für die spektrale Ausmessung einzelner Bildelemente enthalten, so wie dies in der Fig. 21 schematisch angedeutet ist. Dieser Spektralmesskopf 300 ist über einen in der Figur durch einen Pfeil A4 symbolisch angedeuteten motorischen Antrieb unabhängig von den übrigen Komponenten der Messeinrichtung in y-Richtung bewegbar und damit in Verbindung mit der Bewegung des Messwagens MC in x-Richtung über jedem beliebigen Bildelement des Messobjekts positionierbar. Der Spektralmesskopf 300 und sein Antrieb in y-Richtung wird selbstverständlich auch von der Mess- und Steuereinrichtung MDC gesteuert. Vorzugsweise ist der Spektralmesskopf 300 mit einem Polarisationsfilter 301 ausgestattet, das ferngesteuert in den Messstrahlengang eingeführt bzw. wieder aus diesem entfernt werden kann, so dass wahlweise Spektralmessungen mit und ohne Polarisationsfilter möglich sind. Die Bewegung des Polarisationsfilters 301 ist in der Fig. 21 durch einen Pfeil A5 symbolisiert. Das Polarisationsfilter 301 umfasst zwei konzentrische Teile, deren Polarisationsrichtungen zueinander gekreuzt sind. Der äussere Teil wird vom Beleuchtungsstrahlengang durchsetzt, der innere Teil vom Messlichtstrahlengang. Um Messungen mit verschiedenen Filtern zeitgleich durchführen zu können, kann auch mehr als ein unabhängiger Spektralmesskopf vorgesehen sein, um z.B. mit zwei Spektralmessköpfen Messungen mit und ohne Polarisationsfilter zu erhalten.

Der Spektralmesskopf 300 wird in der praktischen Anwendung für hochpräzise (spektrale) Messungen an relativ wenigen ausgewählten Bildelementen des Messobjekts S eingesetzt. Typischerweise wird damit der auf Druckbögen üblicherweise vorhandene Farbkontrollstreifen CMS (Fig.1) ausgemessen. Dies kann in einem eigenen Abtastdurchlauf oder aber auch zusammen mit dem oder einem der Abtastdurchläufe der Messeinrichtung MD erfolgen. In beiden Fällen ist es aufgrund der a priori nicht genau bekannten Lage von ausgewählten Bildelementen besonders vorteilhaft, die von der Messeinrichtung mit den Zeilensensoren erfasste Bildinformation dahingehend zu interpretieren, dass diese zur Positionierung des unabhängigen Spektralmesskopfes auf spezifische Bildelemente verwendet werden kann. So kann insbesondere die genaue Lage des Farbkontrollstreifens CMS während des Messvorgangs bestimmt werden und damit der unabhängige Spektralmesskopf gezielt über den interessierenden Bildelementen positioniert werden.

Der spektrale Messkopf ist als qualitativ hochwertiges Farbmesssystem ausgelegt. Er erfüllt alle Anforderungen an die Messtechnik der internationalen Normen zur Farbmesstechnik (zum Beispiel ISO 13655 oder DIN 5033). Im speziellen ist der spektrale Einzelmesskopf 300 mit einer ringförmigen oder zirkularen Messgeometrie ausgelegt, so dass keine richtungsabhängigen Effekte auftreten, wenn die Probe unter dem spektralen Einzelmesskopf gedreht wird. Ein Beispiel für die Realisierung eines solchen Spektralmesskopf ist das Spektralphotometer SpectroEye der Firma GretagMacbeth AG, welches als spektraler Messkopf in der Messvorrichtung eingesetzt werden kann. Ausserdem ist es vorteilhaft, wenn der spektrale Messkopf und die Bildmesseinheit ein Beleuchtungsspektrum im Messlicht ohne ultravioletten (UV-) Anteil aufweisen. Diese Charakteristik kann erreicht werden, wenn in der Beleuchtungsoptik ein Kantenfilter eingesetzt wird, welches den spektralen Anteil im Beleuchtungsspektrum unterhalb der Wellenlänge von 400 nm unterdrückt. Für solche Filter werden handelsübliche Absorptionsfiltergläser zum Beispiel von der Firma Schott angeboten. Die Unterdrückung des UV-Anteils erleichtert die Korrektur der Messdaten, da die nichtlinearen Effekte für die unterschiedliche Anregung von optischen Aufhellern im Substrat nicht berücksichtigt werden. Wenn keine UV-Unterdrückung verwendet wird, muss eine Kompensation der Fluoreszenzeffekte der optischen Aufheller im Korrekturmodell berücksichtigt werden. Idealerweise wird diese Kompensation in einem Korrekturmodell für den Einfluss der Messgeometrie und Medienabhängigkeit mitberücksichtigt.

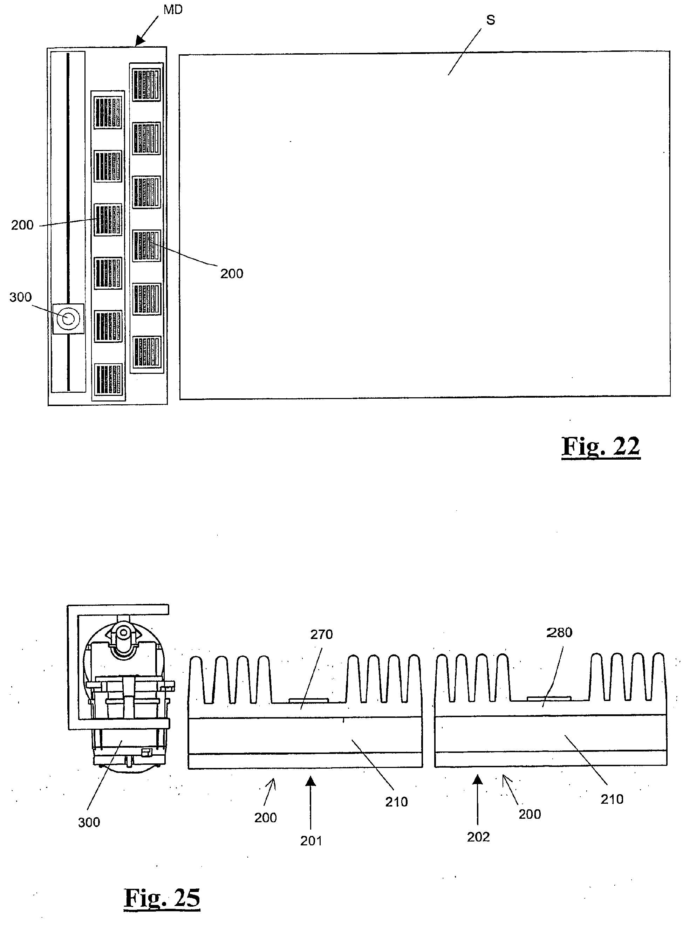

Im folgenden wird anhand der Figuren 22-25 eine besonders zweckmässige und bevorzugte Ausführungsform der erfindungsgemässen Messeinrichtung bzw. Abtastvorrichtung erläutert. Der generelle Aufbau mit Messtisch MT und Messwagen MC ist dabei gleich wie vorstehend ausgeführt, lediglich die im Messwagen befindliche Messeinrichtung MD unterscheidet sich. Im folgenden wird daher im wesentlichen nur auf die letztere eingegangen.

Die Fig. 22 zeigt stark symbolisiert die im Messwagen MC befindliche, in eine grössere Anzahl von Messmodulen 200 unterteilte und zusätzlich einen Spektralmesskopf 300 umfassende Messeinrichtung MD in Position neben dem Messobjekt S. Der Messwagen führt die Messeinrichtung MD, wie schon vorstehend beschrieben, in einem ersten Durchgang (in der Zeichnung) von links nach rechts über das Messobjekt S (Hinlauf) und dann gleich anschliessend in einem zweiten Durchgang von rechts nach links wieder in die Ausgangsposition zurück (Rücklauf).

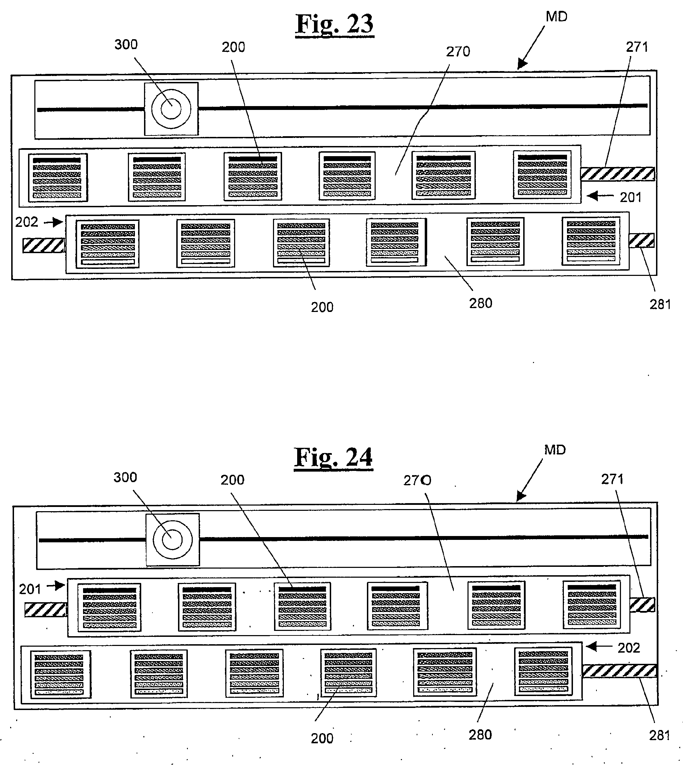

Wie man aus den Figuren 23 und 24 etwas detaillierter erkennt; sind die Messmodule 200 analog Fig. 11 in zwei Gruppen 201 und 202 angeordnet, wobei die Messmodule der einen Gruppe mit denen der anderen Gruppe auf Lücke stehen und sich dabei (in y-Richtung) leicht überlappen, so dass insgesamt keine Abtastlücken entstehen. Die Messmodule 200 sind gleich aufgebaut wie die im Zusammenhang mit den Figuren 13-19 beschriebenen Messmodule. Alle Messmodule 200 sind mit Ausnahme der verwendeten Farbfilter identisch aufgebaut. Innerhalb einer Gruppe enthalten alle Messmodule den gleichen Satz von Farbfiltern, die Farbfiltersätze der einen Gruppe unterscheiden sich jedoch von denen der anderen Gruppe. Im gezeigten Beispiel ist jedes Messmodul 200 mit 6 Filtern ausgestattet, so dass sich insgesamt max. 12 verschiedene Farbkanäle ergeben.

Die Messmodule 200 jeder Gruppe 201 und 202 sind unter sich unbeweglich auf je einem Schlitten 270 bzw. 280 montiert. Die beiden Modul-Gruppen 201 und 202 sind als Ganze durch hier nicht im Detail dargestellte, an sich konventionelle Antriebsrnittel in Längsrichtung des Messwagens gegenläufig um den halben Abstand zwischen zwei benachbarten Modulen versetzbar. Als Antriebsmittel können beispielsweise zwei motorisch angetriebene Spindeln 271 und 281 eingesetzt werden, die wiederum von der Mess- und Antriebssteuerung MDC gesteuert werden. Die Schlitten 270 und 280 sind, wie dies aus der Schnittdarstellung der Fig. 25 erkennbar ist, vorteilhafterweise als Kühlkörper zur Wärmeabfuhr aus den Modulgehäusen 210 ausgebildet.

Die Fig. 23 zeigt die beiden Mo dul-Gruppen 201 und 202 in der Ausgangsposition, die Fig. 24 in der dazu versetzten Position. Man erkennt, dass sich in der versetzten Position der Modul-Gruppen die Lagen der Module 200 in den beiden Gruppen gegenseitig vertauscht haben. Wenn sich die Modul-Gruppen beim Hinlauf der Messeinrichtung MD in der Ausgangsposition und beim Rücklauf in der versetzten Position befinden, wird jeder Bildpunkt des Messobjekts insgesamt in allen vorhandenen Farbkanälen abgetastet.

In Fig. 25 sind die beiden Modul-Gruppen 401 und 402 in einem Schnitt parallel zur x-z-Koordinatenebene sowie der zusätzliche Spektralmesskopf 300 erkennbar.

Der Farbkontrollstreifen CMS befindet sich beim Offsetdruck prinzipbedingt immer längs einer bestimmten Seite des Druckbogens (in der Fig. 1 entlang der langen Seite, also in x-Richtung). Wird der Messwagen MC und damit die darin enthaltene Messvorrichtung MD parallel zum Farbkontrollstreifen CMS angeordnet, besteht die Möglichkeit, den üblicherweise schmalen Farbkontrollstreifen mit einer nur sehr kleinen Bewegung des Messwagen MC und damit innerhalb sehr kurzer Zeit abzutasten. Die Höhe eines Farbkontrollstreifens macht typischerweise nur 1 % der Höhe eines Druckbogens aus (vgl. dazu Fig. 1), demnach kann der Farbkontrollstreifen alleine typischerweise 100 mal schneller eingelesen werden als der ganze Bogen. Wird beim Scannen eines Bogens zunächst alleine der Farbkontrollstreifen und erst dann der ganze Bogen abgetastet, kann im Falle elektronisch gesteuerter Druckmaschinen innerhalb sehr kurzer Zeit eine zonenabhängige Regelempfehlung an die Druckmaschinensteuerung übermittelt werden. Druckaufträge können dadurch wesentlich schneller und mit weniger Makulatur eingerichtet werden.

Die Berechnung ausreichend genauer Farbwerte X,Y,Z aus den mit der mehrkanaligen Messeinrichtung MD gewonnenen Abtastwerten kann für jedes Bildelement gemäss der folgenden Matrizentransformation erfolgen. Für den Fall von 6 Farbkanälen mit den zugehörigen 6 Abtastwerten $M_1...M_6$ sieht die Transformationsmatrix wie folgt aus:

$$\begin{pmatrix} X \\ Y \\ Z \end{pmatrix} = \begin{pmatrix} k_{11} & k_{12} & k_{13} & k_{14} & k_{15} & k_{16} \\ k_{21} & k_{22} & k_{23} & k_{24} & k_{25} & k_{26} \\ k_{31} & k_{32} & k_{33} & k_{34} & k_{35} & k_{36} \end{pmatrix} \bullet \begin{pmatrix} M_1 \\ M_2 \\ M_3 \\ M_4 \\ M_5 \\ M_6 \end{pmatrix}$$

Die Koeffizienten $k_{11}....k_{36}$ der Transformationsmatrix können empirisch anhand einer grösseren Zahl von Vergleichsmessungen (einmal mit der erfindungsgemässen Messeinrichtung und einmal mit einem präzisen Spektralmessgerät) bestimmt werden. Dieses Vorgehen ist natürlich nicht auf sechs Farbkanäle beschränkt, mit einer geringeren Anzahl von Farbkanälen sind aber die Ergebnisse weniger präzis. Anstelle eines externen Spektrahnessgeräts kann auch der vorstehend erwähnte Spektralmesskopf 300 herangezogen werden.

Die Bestimmung der Koeffizienten der Transformationsmatrix mittels Ausgleichsrechnung ermöglicht die Korrektur von Herstellungsfehlern und Toleranzen für die verschiedenen Filter und auch der Leuchtdioden. Es muss deshalb für jeden räumlichen Bereich der Messeinrichtung, welcher einer Einheit aus Leuchtdioden und Filtern entspricht, eine individuelle Transformationsmatrix berechnet werden.

Die CIE Farbwerte X,Y,Z werden nach bekannter Definition (CIE Publikation 15.2) für eine Kombination von Beleuchtungsart und Normalbeobachter bestimmt. Es können deshalb spezifische Transformationsmatritzen für jede Kombination von Beleuchtungsart und Normal beobachter implementiert werden.

Bei einem reduziertem Set von 6-8 verschiedenen Farbfiltern kann durch Anwendung einer analogen Transformationsmatrix auch die Genauigkeit der Farbdichtemessung verbessert werden. Die Transformation für 6 Filter ist in der folgenden Gleichung dargestellt:

$$\begin{pmatrix} Dc \\ Dm \\ Dy \end{pmatrix} = \begin{pmatrix} k_{11} & k_{12} & k_{13} & k_{14} & k_{15} & k_{16} \\ k_{21} & k_{22} & k_{23} & k_{24} & k_{25} & k_{26} \\ k_{31} & k_{32} & k_{33} & k_{34} & k_{35} & k_{36} \end{pmatrix} \bullet \begin{pmatrix} D_1 \\ D_2 \\ D_3 \\ D_4 \\ D_5 \\ D_6 \end{pmatrix}$$

Darin sind $D_1...D_6$ die Dichtewerte der einzelnen Abtastmesswerte $M_1...M_6$. Dc, Dm, Dy sind Dichtewerte gemäss einem bestimmten Dichtestandard aus der ISO Norm 5. Bei einem reduzierten Filterset (wenige Farbkanäle) ist es vorteilhaft, einen Dichtestandard mit breitbandigen Filterfunktionen mit Halbwertsbreiten im Bereich von 30 bis 50 nm, wie zum Beispiel Status E, als Dichtereferenz zu wählen.

Die Koeffizienten $k_{11}$....$k_{36}$ der Transformationsmatrix können empirisch anhand einer grösseren Zahl von Vergleichsmessungen der entsprechenden Dichtewerte (einmal mit der mehrkanaligen Zeilenabtastung und einmal mit einem präzisen Spektral messgerät) bestimmt werden. Anstelle eines externen Spektralmessgeräts kann auch wieder der vorstehend erwähnte Spektralmesskopf 300 herangezogen werden.

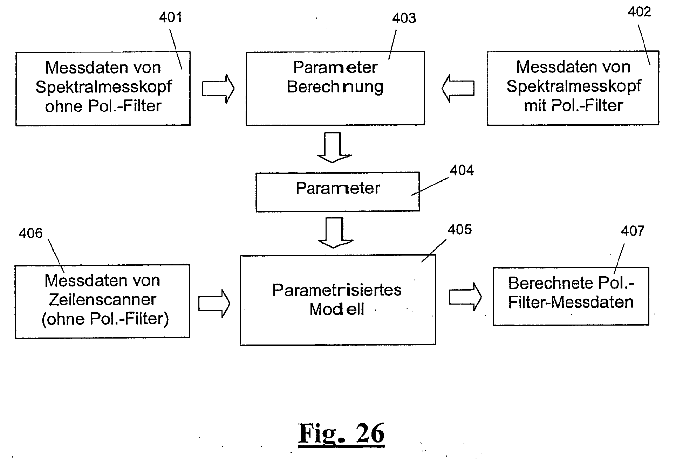

In der Messeinrichtung MD mit den Zeilensensoren sind Polarisationsfilter aus verschiedenen Gründen schlecht einsetzbar, z.B. weil dadurch das Messlicht zu stark gedämpft würde. Anderseits wären aber für viele Anwendungen Messungen mit Polarisationsfilter erforderlich oder zumindest günstig. Gemäss einem weiteren Aspekt der Erfindung werden nun aus den von der mehrkanaligen Messeinrichtung MD ohne Polarisationsfilter erzeugten Abtastwerten Polfilter-Abtastwerte berechnet, die einer Abtastung unter Einsatz von Polarisationsfiltern entsprechen. Diese Umrechnung erfolgt beispielsweise im externen Rechner C anhand eines parametrisierten Modells, dessen Parameter aus mit dem Spektralmesskopf 300 an ausgewählten Bildelementen mit und ohne Polarisationsfilter 301 gemessenen spektralen Abtastwerten bestimmt werden. Als ausgewählte Bildelemente werden typischerweise diejenigen des Farbmessstreifens CMS im Messobjekt S verwendet. Die Fig. 26 verdeutlicht diese Zusarnmenhänge. Aus den mit und ohne Polarisationsfilter mit dem Spektralmesskopf 300 ermittelten Messdaten 401 bzw. 402 werden in einer Parameterberechnungsstufe 403 Parameter 404 für das Modell gebildet und dem Modell 405 zugeführt. Dieses rechnet dann die ohne Polarisationsfilter ermittelten Messdaten 406 der Zeilensensoren in entsprechende Polfiltermessdaten 407 um. Das Korrekturmodell umfasst typischerweise eine Offset-Korrektur, eine ggf. spektrale Skalierung und eine spektral abhängige multiplikative Kennlinien-Korrektur.

Die Berechnung der Parameter 404 erfolgt mittels einer Ausgleichsrechnung, die das Korrekturmodell enthält und die mit dem Spektralmesskopf mit und ohne Polarisationsfilter an den ausgewählten Bildelementen gemessenen Referenzmesswerte (spektralen Abtastwerte) als Eingangsgrössen und die Korrekturparameter als Variable verwendet. Die Ausgleichsrechnung wird dabei so geführt bzw. die Korrekturparameter als Variable werden so berechnet, dass die ohne Polarisationsfilter gemessenen und dann anhand des Korrekturmodells korrigierten Referenzmesswerte möglichst wenig von den mit Polarisationsfilter gemessenen Referenzmesswerten des Spektralmesskopfs abweichen.

Die Polarisationsfilter-Korrektur bzw. Umrechnung in Polarisationsfilter-Bildmesswerte kann auch ohne separaten Spektralmesskopf implementiert werden. In diesem Fall wird der Druckbogen mit der Messeinrichtung MD ohne Polarisationsfilter komplett eingemessen. Dann wird in die Messeinrichtung MD ein Polarisationsfilter in den Beleuchtungs- und Sammelkanal eingeschwenkt und in einem separaten sp eziellen Abtastgang mit ungefähr 10 mal kleinerer Abtastgeschwindigkeit nur ein Teilbereich des Bildes mit Polarisationsfilter ausgemessen. Dieser Teilbereich beinhaltet vorteilhaft den Farbkontrollstreifen CMS. Durch die geringere Abtastgeschwindigkeit stehen die beim Einsatz von Polarisationsfiltern wegen des Lichtverlusts erforderlichen, ungefähr 10 mal längeren Messzeiten (Integrationszeiten) zur Verfügung. Die Bestimmung der Umrechnungsparameter und die Umrechnung der Messwerte erfolgt dann analog der anhand der Fig. 26 erläuterten Methode, wobei aber an die Stelle der vom Spektralmesskopf ermittelten Messwerte 401 und 402 die aus dem ausgewählten Teilbereich des Bildes stammenden Messwerte der Messeinrichtung MD mit und ohne Polarisationsfilter treten. In der Fig. 3 ist ein aus zwei Teilen mit gekreuzten Polarisationsrichtungen bestehendes Polarisationsfilter symbolisch dargestellt und mit 18 bezeichnet. Die Verstellbarkeit in die Strahlengänge und aus den Strahlengängen ist durch den Pfeil 18a symbolisiert.

Für spezielle Anwendungen ist es interessant, für jeden Bildpunkt das entsprechende Remissionsspektrum zu kennen. Wenn die Erfassung der Bilddaten nur mit einem reduzierten Abtastset (wenige Farbkanäle) durchgeführt wurde, können angenäherte Spektren aus den Abtastwerten durch Verwendung von Algorithmen aus dem spektralen Color Management erzeugt werden. Diese Techniken sind umfassend in der Dissertation "Navigating the roadblocks to spectral color reproduction: Data-efficient multichannel spectral imaging and spectral color management" von Mitchell R. Rosen , Rochester Institute of Technology, August 2004 beschrieben.

Die Bestimmung von spektralen Bilddaten aus den mehrkanalig gemessenen Abtastwerten der Messeinrichtung MD kann auch wie im folgenden skizziert unter Beiziehung des Spektralmesskopf 300 erfolgen: Mit dem Spektralmesskopf 300 wird der Farbkontrollstreifen spektral eingemessen. Im Farbkontrollstreifen CMS befinden sich Kontrollfelder (Volltonfelder und Rasterdruckfelder) von allen am Druckprozess beteiligten Farben. Für diese Felder existieren nach der Messung mit dem Spektralmesskopf präzise Remissionsspektren. Diese Remissionsspektren des CMS bilden die Basis für die Berechnung der Remissionsspektren aus den (mehrkanalig abgetasteten) Abtastwerten. Es ist bekannt, dass anhand der Spektren der Volltöne und einiger Rasterfeldem das Spektrum für jeden beliebigen Bildpunkt mit einem Modell beschrieben werden kann, wenn für die Bilddaten die Rastertonwerte des Farbaufbaus bekannt sind. Ein Druckmodell basiert in der Regel auf der Theorie von Neugebauer für die Beschreibung des Rasterdruckprozesses und den Theorien von Kubelka Munk oder Hoffmann Schmelzer für die Simulation von Volltondruckproben. Die Bilddaten sind durch eine relativ geringe Anzahl von Abtastwerten definiert. Durch die Kenntnis von effektiv gemessenen Bildmesswerten kann die Genauigkeit der Spektrenberechnung mit dem Druckmodell verbessert werden. Das Druckmodell beschreibt das Spektrum in jedem Bildpunkt als gewichtete Kombination der Grundspektren. Diese Grundspektren können auch in Funktion der Abtastwerte der Bildmesstechnik parametrisiert werden. Die Bestimmung dieser Funktion erfolgt über eine Ausgleichsrechnung mit den Messwerten des Farbkontrollstreifens CMS, welche mit beiden Messeinrichtungen (Zeilenscanner und Spektralmesskopf) bestimmt wurden.

Die erfindungsgemässe Messeinrichtung bzw. Abtastvorrichtung erlaubt die Abtastung ganzer Druckbögen mit hoher Geschwindigkeit und ist konstruktiv vergleichsweise wenig aufwändig. Sie vereinigt in sich die Vorteile der von Bilderfassungsgeräten bekannten Technologien, ohne jedoch deren inhärente Nachteile aufzuweisen. Sie ist damit für Qualitätskontrollanwendungen in der grafischen Industrie und für die farbmetrische Steuerung von Druckprozessen geeignet.

**Patentansprüche**

1. Messeinrichtung (MD) zur bildelementweisen fotoelektrischen Ausmessung eines Messobjekts (S), insbesondere eines vorzugsweise mehrfarbig bedruckten Druckbogens, welche Messeinrichtung (MD) gleichzeitig jeweils eine Vielzahl von in einer Zeile liegenden Bildelementen eines Messobjekts fotoelektrisch abtastet und für jedes abgetastete Bildelement zugehörige Messsignale erzeugt, mit einer Beleuchtungseinrichtung (11 bis 13) zur Beaufschlagung der Bildelemente des Messobjekts (S) mit Beleuchtungslicht (11a), mit einer wellenlängenbereichsselektiven fotoelektrischen Empfängereinrichtung und mit Aufpickoptikmitteln, die von beleuchteten Bildelementen des Messobjekts (S) remittiertes Messlicht (21a) auffangen und auf die fotoelektrische Empfängereinrichtung leiten, wobei die fotoelektrische Empfängereinrichtung das ihr von den Bildelementen des Messobjekts (S) zugeführte Messlicht (21 a) in entsprechende Messsignale für die Bildelemente des Messobjekts (S) umwandelt, **dadurch gekennzeichnet,**
   **dass** die Beleuchtungseinrichtung (11 bis 13) mehrere parallele linienförmige Anordnungen von Leuchtdioden (11) aufweist, welche das Messobjekt (S) in einer Anzahl von parallelen Beleuchtungsstreifen (15) mit Beleuchtungslicht (11a) beaufschlagen, dass die Beleuchtungseinrichtung (11 bis 13) Mittel (12, 13) zur Begrenzung des Einfallswinkelbereichs umfasst, so dass im Wesentlichen jedes in den Beleuchtungsstreifen (15) befindliche und beleuchtete Bildelement Licht (11a) nur unter einem für Farbmessanwendungen standardisierten Einfallswinkelbereich empfängt, dass die fotoelektrische Empfängereinrichtung eine der Anzahl Beleuchtungsstreifen (15) entsprechende Anzahl von parallel im Abstand angeordneten fotoelektrischen Zeilensensoren (21) aufweist, die parallel zur Längserstreckung der Beleuchtungsstreifen (15) ausgerichtet und durch vorgeschaltete Farbfilter (22) auf unterschiedliche Wellenlängenbereiche sensibilisiert sind, dass die Aufpickoptikmittel eine der Anzahl Zeilensensoren (21) entsprechende Anzahl von linienförmigen Optikanordnungen (31) aufweisen, die parallel zu den Beleuchtungsstreifen (15) ausgerichtet sind und von je einer Bildzeile (16) innerhalb der Beleuchtungsstreifen (15) remittiertes Messlicht (2 1 a) auf je einen der Zeilensensoren (21) lenken, wobei die linienförmigen Optikanordnungen (31) so ausgebildet sind, dass das Messlicht (21a) aus im Wesentlichen jedem Bildelement der Bildzeilen (16) nur unter einem für Farbmessanwendungen standardisierten Ausfallswinkelbereich aufgefangen wird, und dass die Beleuchtungsstreifen (15) mit den zugeordneten linearen Optikanordnungen (31) und Zeilensensoren (21) optisch gegeneinander abgeschottet sind, so dass sich Messsignale aus Bildzeilen (16) in benachbarten Beleuchtungsstreifen (15) nicht gegenseitig beeinflussen können;
   wobei die Mittel zur Begrenzung des Einfallswinkelbereichs Schlitzblenden (13) umfassen, welche die Breite der ausgeleuchteten Beleuchtungsstreifen (15) auf dem Messobjekt (S) begrenzen, vorzugsweise auf einen Wert, der kleiner ist als das Sichtfeld der linienförmigen Optikanordnungen (31) quer zur Längsrichtung derselben.

2. Messeinrichtung nach Anspruch 1, **dadurch gekennzeichnet, dass** Mittel vorgesehen sind, welche die gegenseitige Beeinflussung der Messsignale aus benachbarten Bildelementen innerhalb derselben Bildzeilen (16) des Messobjekts zumindest reduzieren.

3. Messeinrichtung nach einem der vorangehenden Ansprüche, **dadurch gekennzeichnet, dass** die Mittel zur Begrenzung des Einfallswinkelbereichs den linienförmigen Anordnungen von Leuchtdioden (11) zugeordnete Kollimatorlinsen (12) umfassen.

4. Messeinrichtung nach einem der vorangehenden Ansprüche, **dadurch gekennzeichnet, dass** zwischen den einzelnen Leuchtdioden (11) einer linienförmigen Leuchtdiodenanordnung Blendenlamellen (219) zur Begrenzung der Beleuchtungswinkel in Linienrichtung angeordnet sind.

5. Messeinrichtung nach einem der vorangehenden Ansprüche, **dadurch gekennzeichnet, dass** zur Reduktion von Übersprecheffekten innerhalb der Bildzeilen (16) die Farbfilter (22) schräg zum Hauptstrahlengang (21a) des auf die Zeilensensoren (21) auftreffenden Messlichts gestellt sind.

6. Messeinrichtung nach einem der vorangehenden Ansprüche, **dadurch gekennzeichnet, dass** die linienförmigen Optikanordnungen (31) aus einer parallelen Aneinanderreihung von Gradientenindex-Linsen (31 a) bestehen.

7. Messeinrichtung nach einem der vorangehenden Ansprüche, **dadurch gekennzeichnet, dass** die Zeilensensoren (21) als integrierte CIS- (contact image sensor)- Elemente ausgebildet sind.

8. Messeinrichtung nach einem der vorangehenden Ansprüche, **dadurch gekennzeichnet, dass** die linienförmigen Anordnungen von Leuchtdioden (11) Hochleistungsleuchtdioden mit Lambertscher Abstrahlcharakteristik umfassen.

9. Messeinrichtung nach einem der vorangehenden Ansprüche, **dadurch gekennzeichnet, dass** wenigstens sechs Zeilensensoren (21) und zugeordnete lineare Optikanordnungen (31) vorgesehen sind, wobei die Zeilensensoren (21) durch vorgeschaltete Farbfilter (22) auf unterschiedliche Wellenlängenbereiche sensibilisiert sind.

10. Messeinrichtung nach Anspruch 9, **dadurch gekennzeichnet, dass** drei der Farbfilter (22) die Durchlasscharakteristik der genormten Filter für die Farbdichtemessung aufweisen und drei der Farbfilter davon verschiedene, für die Farbmessung optimierte Durchlasscharakteristiken besitzen.

11. Messeinrichtung nach einem der vorangehenden Ansprüche, **dadurch gekennzeichnet, dass** je ein Paar von benachbarten Beleuchtungsstreifen (15) durch eine gemeinsame linienförmige Anordnung von Leuchtdioden (11) ausgeleuchtet ist.

12. Messeinrichtung nach einem der vorangehenden Ansprüche, **dadurch gekennzeichnet, dass** die Leuchtdioden der linienförmigen Anordnungen bezüglich ihrer Spektralcharakteristiken an die Durchlasscharakteristiken der eingesetzten Farbfilter (22) angepasst sind.

13. Messeinrichtung nach einem der vorangehenden Ansprüche, **dadurch gekennzeichnet, dass** wenigstens eine der linienförmigen Anordnungen im nahen Infrarot-Bereich strahlende Leuchtdioden (11) umfasst.

14. Messeinrichtung nach einem der vorangehenden Ansprüche, **dadurch gekennzeichnet, dass** wenigstens einer der Zeilensensoren (21) auf zwei unterschiedliche Wellenlängenbereiche sensibilisiert ist, wovon einer vorzugsweise im nahen Infrarot-Bereich liegt.

15. Messeinrichtung nach einem der vorangehenden Ansprüche, **dadurch gekennzeichnet, dass** wenigstens eine der linienförmigen Anordnungen von Leuchtdioden (11) selektiv ansteuerbare Leuchtdioden mit unterschiedlicher Spektralcharakteristik umfasst und dass wenigstens eines der Farbfilter (22) als Doppelbandpassfilter ausgebildet ist, welches zwei unterschiedliche Wellenlängenbereiche transmittiert und auf die unterschiedlichen Spektralcharakteristiken der Leuchtdioden abgestimmt ist.

16. Messeinrichtung nach einem der vorangehenden Ansprüche, **dadurch gekennzeichnet, dass** sie zusätzlich noch wenigstens einen parallel zu den Beleuchtungsstreifen (15) motorisch beweglichen Spektralmesskopf (300) zur spektralen Ausmessung einzelner Bildelemente aufweist.

17. Messeinrichtung nach Anspruch 16, **dadurch gekennzeichnet, dass** der Spektralmesskopf (300) mit einem in den Messstrahlengang einbringbaren und wieder entfernbaren Polarisationsfilter (301) ausgestattet ist, so dass Spektralmessungen mit und ohne Polarisationsfilter durchführbar sind.

18. Messeinrichtung nach einem der vorangehenden Ansprüche, **dadurch gekennzeichnet, dass** sie modular aufgebaut ist und eine Anzahl von im wesentlichen baugleichen Messmodulen (200) umfasst, die je eigene linienförmige Anordnungen von Leuchtdioden (11), eigene linienförmige Optikanordnungen (31) und eigene durch vorgeschaltete Farbfilter (22) auf unterschiedliche Wellenlängenbereiche sensibilisierten Zeilensensoren (21) enthalten.

19. Messeinrichtung nach Anspruch 18, **dadurch gekennzeichnet, dass** die Messmodule (200) in zwei parallelen Modul-Gruppen (201, 202) linear mit gegenseitigem Abstand angeordnet sind, wobei die Messmodule (200) der einen Gruppe (201) zu den Messmodulen (200) der anderen Gruppe (202) auf Lücke stehen und sich vorzugsweise in Längsrichtung leicht überlappen.

20. Messeinrichtung nach Anspruch 19, **dadurch gekennzeichnet, dass** die beiden Modul-Gruppen (201, 202) in Längsrichtung gegenläufig verstellbar angetrieben sind, wobei die Längspositionen der Messmodule der einen Modul-Gruppe (201) mit den Längspositionen der Messmodule der anderen Modul-Gruppe (202) vertauschbar sind.

21. Messeinrichtung nach einem der Ansprüche 10 bis 20, **dadurch gekennzeichnet, dass** die Messmodule (200) der einen Modul-Gruppe (201) zumindest partiell mit anderen Farbfiltern (22) ausgerüstet sind als die Messmodule (200) der anderen Modul-Gruppe (202).

22. Messeinrichtung nach einem der Ansprüche 18 bis 21, **dadurch gekennzeichnet, dass** die Messmodule (200) je für sechs Wellenlängenbereiche ausgelegt sind.

23. Messeinrichtung nach einem der vorangehenden Ansprüche, **dadurch gekennzeichnet, dass** die Messeinrichtung (MD) mit aus den Strahlengängen (11a, 21 a) entfernbaren Polarisationsfiltern (18) ausgestattet ist und dass Rechenmittel (C) vorgesehen sind, welche die von den Zeilensensoren (21) ohne Verwendung eines Polarisationsfilters (18) erzeugten Messwerte (406) anhand eines parametrisierten Modells (405) und von den Zeilensensoren (21) nur in ausgewählten Bildelementen mit und ohne Polarisationsfilter ermittelten Messwerten (401, 402) in Polarisationsfilter-Messwerte (407) umrechnen.

24. Messeinrichtung nach Anspruch 17, **dadurch gekennzeichnet, dass** Rechenmittel (C) vorgesehen sind, welche die von den Zeilensensoren (21) ohne Verwendung eines Polarisationsfilters erzeugten Messwerte (406) anhand eines parametrisierten Modells (405) und vom Spektralmesskopf (300) in ausgewählten Bildelementen. mit und ohne Polarisationsfilter (301) ermittelten Messwerten (401, 402) in Polarisationsfilter-Messwerte (407) umrechnen.

25. Messeinrichtung nach einem der vorangehenden Ansprüche, **dadurch gekennzeichnet, dass** Rechenmittel (C) vorgesehen sind, welche die von den Zeilensensoren (21) erzeugten Messwerte ($M_1$-$M_6$) anhand eines Modells oder durch Transformation in normgerechte Farbwerte (X, Y, Z) oder Farbdichtewerte (Dc, Dm, Dy) umrechnen.

26. Messeinrichtung nach Anspruch 16, **dadurch gekennzeichnet, dass** Rechenmittel (C) vorgesehen sind, welche die von den Zeilensensoren (21) erzeugten Messwerte anhand eines parametrisierten Modells in Spektralmesswerte umrechnen, wobei die Parameter des Modells aus Messwerten bestimmt werden, die in ausgewählten Bildelementen sowohl mittels der Zeilensensoren (21) als auch mittels des Spektralmesskopfs (300) erzeugt wurden.

27. Messeinrichtung nach einem der vorangehenden Ansprüche, **dadurch gekennzeichnet, dass** dass Rechenmittel (C) vorgesehen sind, um eine rechnerische Streulichtkorrektur anhand von Messungen an einem Testmuster durchzuführen.

28. Abtastvorrichtung zur bildelementweisen fotoelektrischen Ausmessung eines Messobjekts, insbesondere eines vorzugsweise mehrfarbig bedruckten Druckbogens, mit einem Messtisch (MT), auf welchem das Messobjekt (S) für die Ausmessung befestigbar ist, mit einer über die Oberfläche des Messtischs (MT) bewegbaren Messeinrichtung (MD), welche gleichzeitig jeweils eine Vielzahl von in einer Zeile liegenden Bildelementen des am Messtisch (MT) befestigten Messobjekts (S) fotoelektrisch abtastet und für jedes abgetastete Bildelement zugehörige Messsignale erzeugt, mit einer Antriebseinrichtung (D), welche die Messeinrichtung (MD) über das Messobjekt (S) bewegt, so dass sämtliche Bildelemente des Messobjekts (S) erfassbar sind, mit einer Mess- und Antriebssteuerung (MDC) für die Messeinrichtung (MD) und die Antriebseinrichtung (D) und mit einer Verarbeitungseinrichtung (C), um die von der Messeinrichtung (MD) erzeugten Messsignale aus den abgetasteten Bildelementen des Messobjekts (S) aufzubereiten und auszuwerten, wobei die Messeinrichtung (MD) gemäß Anspruch 1 ausgebildet ist.

29. Abtastvorrichtung nach Anspruch 28, **dadurch gekennzeichnet, dass** die Messeinrichtung gemäß einem der Ansprüche 2 bis 27 ausgebildet ist.

30. Abtastvorrichtung nach Anspruch 28 oder 29, **dadurch gekennzeichnet, dass** die Länge der Messeinrichtung (MD) kleiner ist als der maximal zu überstreichende Abtastbereich des Messtischs (MT), und dass die Mess- und Antriebssteuerung (MDC) dazu ausgebildet ist, die Abtastung des ganzen Messobjekts (S) in zwei oder mehreren Abtastdurchgängen durchzuführen, wobei die Messvorrichtung (MD) für jeden Abtastdurchgang in Längsrichtung versetzt wird.

31. Abtastvorrichtung nach einem der Ansprüche 28 bis 30, **dadurch gekennzeichnet, dass** die Mess- und Antriebssteuerung (MDC) dazu ausgebildet ist, in einem speziellen Abtastgang nur ausgewählte Bildelemente des Messobjekts (S), vorzugsweise einen auf dem Messobjekt (S) enthaltenen Farbmessstreifen (CMS), mit geringerer Abtastgeschwindigkeit abzutasten, so dass in diesem ersten Abtastgang ausreichend lange Messzeiten für den Einsatz von Polarisationsfiltern zur Verfügung stehen.

**32.** Abtastvorrichtung gemäss einem der Ansprüche 28 bis 31, wobei die Messeinrichtung (MD) modular aufgebaut ist und eine Anzahl von im wesentlichen baugleichen Messmodulen (200) umfasst, die je eigene linienförmige Anordnungen von Leuchtdioden (11), eigene linienförmige Optikanordnungen (31) und eigene durch vorgeschaltete Farbfilter (22) auf unterschiedliche Wellenlängenbereiche sensibilisierten Zeilensensoren (21) enthalten, **dadurch gekennzeichnet, dass** drei der Farbfilter (22) bei allen allen Messmodulen (200) gleich sind, so dass alle Messmodule (200) die Bildelemente des Messobjekts (S) in denselben drei Wellenlängenbereichen abtasten, und dass Rechenmittel (C) vorgesehen sind, welche aus den Abtastwerten der Bildelemente in diesen drei Wellenlängenbereichen ein Vorschaubild berechnen und vorzugsweise auf dem Farbmonitor (M) zur Anzeige bringen.

**Claims**

**1.** A measuring instrument (MD) for the pixel-wise photoelectric measurement of a measurement object (S), in particular a printed sheet preferably printed in multiple colours, which measuring instrument (MD) in each case simultaneously scans photoelectrically a plurality of pixels of a measurement object situated in one line and generates associated measurement signals for each scanned pixel, with an illumination device (11 to 13) for acting upon the pixels of the measurement object (S) with illumination light (11a), with a photoelectric receiver device selective for wavelength ranges and with optical pick-up means which intercept measurement light (21a) remitted from illuminated pixels of the measurement object (S) and transmit it to the photoelectric receiver device, wherein the photoelectric receiver device converts the measurement light (21a) supplied to it by the pixels of the measurement object (S) into corresponding measurement signals for the pixels of the measurement object (S), **characterized in that** the illumination device (11 to 13) comprises a plurality of parallel linear arrangements of light-emitting diodes (11) which act upon the measurement object (S) with illumination light (11a) in a plurality of parallel illumination strips (15), the illumination device (11 to 13) comprises means (12, 13) for limiting the range of angles of incidence, so that essentially each pixel present in the illumination strips (15) and illuminated receives light (11a) only in a range of angles of incidence standardized for colour measurement applications, the photoelectric receiver device has a number - corresponding to the number of illumination strips (15) - of photoelectric line sensors (21) which are arranged parallel at a distance from one another and which are orientated parallel to the longitudinal extension of the illumination strips (15) and which are sensitized to different wavelength ranges by colour filters (22) arranged in front, the optical pick-up means have a number - corresponding to the number of line sensors (21) - of linear optic arrangements (31) which are orientated parallel to the illumination strips (15) and which direct measurement light (21 a) remitted from each image line (16) inside the illumination strips (15) to each one of the line sensors (21), wherein the linear optic arrangements (31) are designed in such a way that the measurement light (21a) from essentially each pixel of the image lines (16) is intercepted only in a range of angles of incidence standardized for colour measurement applications, and the illumination strips (15) with the associated linear optic arrangements (31) and line sensors (21) are sealed off from one another optically so that the measurement signals from image lines (16) cannot influence one another in adjacent illumination strips (15); wherein the means for limiting the range of angles of incidence comprise slit apertures (13) which limit the width of the illuminated illumination strips (15) on the measurement object (S), preferably to a value which is smaller than the field of view of the linear optic arrangements (31) transversely to the longitudinal direction thereof.

**2.** A measuring instrument according to claim 1, **characterized in that** means are provided which at least reduce the mutual influencing of the measurement signals from adjacent pixels inside the same image lines (16) of the measurement object.

**3.** A measuring instrument according to one of the preceding claims, **characterized in that** the means for limiting the range of angles of incidence comprise collimator lenses (12) associated with the linear arrangements of LEDs (11).

**4.** A measuring instrument according to any one of the preceding claims, **characterized in that** aperture blades (219) for limiting the angles of incidence are arranged in the linear direction between the individual LEDs (11) of a linear LED arrangement.

**5.** A measuring instrument according to any one of the preceding claims, **characterized in that**, in order to reduce cross-talk effects inside the image lines (16), the colour filters (22) are set obliquely to the main beam path (21 a) of the measurement light striking the line sensors (21).

6. A measuring instrument according to any one of the preceding claims, **characterized in that** the linear optic arrangements (31) comprise a parallel stringing together of gradient index lenses (31a).

7. A measuring instrument according to any one of the preceding claims, **characterized in that** the line sensors (21) are designed in the form of integrated CIS (contact image sensor) elements.

8. A measuring instrument according to any one of the preceding claims, **characterized in that** the linear arrangements of LEDs (11) comprise high-performance LEDs with a Lambertian radiation characteristic.

9. A measuring instrument according to any one of the preceding claims, **characterized in that** at least six line sensors (21) and associated linear optic arrangements (31) are provided, wherein the line sensors (21) are sensitized to different wavelength ranges by colour filters (22) arranged in front.

10. A measuring instrument according to claim 9, **characterized in that** three of the colour filters (22) have the transmission characteristic of the standardized filters for the measurement of the colour density and three of the colour filters have transmission characteristics different therefrom and optimized for colour measurement.

11. A measuring instrument according to any one of the preceding claims, **characterized in that** one pair of adjacent illumination strips (15) is illuminated in each case by a common linear arrangement of LEDs (11).

12. A measuring instrument according to any one of the preceding claims, **characterized in that** the LEDs of the linear arrangements are adapted in terms of their spectral characteristics to the transmission characteristics of the colour filters (22) used.

13. A measuring instrument according to any one of the preceding claims, **characterized in that** at least one of the linear arrangements comprises LEDs (11) radiating in the near infrared range.

14. A measuring instrument according to any one of the preceding claims, **characterized in that** at least one of the line sensors (21) is sensitized to two different wavelength ranges, one of which is preferably in the near infrared range.

15. A measuring instrument according to any one of the preceding claims, **characterized in that** at least one of the linear arrangements of LEDs (11) comprises LEDs capable of being selectively actuated and having a different spectral characteristic, and at least one of the colour filters (22) is designed in the form of a double band pass filter which transmits two different wavelength ranges and which is adapted to the different spectral characteristics of the LEDs.

16. A measuring instrument according to any one of the preceding claims, **characterized in that** it additionally has at least one spectral measurement head (300) movable in a motorized manner parallel to the illumination strips (15) for the spectral measurement of individual pixels.

17. A measuring instrument according to claim 16, **characterized in that** the spectral measurement head (300) is provided with a polarization filter (301) capable of being moved into the measurement beam path and of being removed therefrom again, so that spectral measurements are capable of being carried out with and without polarization filters.

18. A measuring instrument according to any one of the preceding claims, **characterized in that** it is designed in a modular manner and comprises a plurality of measurement modules (200) of substantially similar design which contain in each case separate linear arrangements of LEDs (11), separate linear optic arrangements (31) and separate line sensors (21) sensitized to different wavelength ranges by colour filters (22) arranged in front.

19. A measuring instrument according to claim 18, **characterized in that** the measurement modules (200) are arranged in a linear manner in two parallel module groups (201, 202) at a mutual distance, wherein the measurement modules (200) of one group (201) are set at a gap with respect to the measurement modules (200) of the other group (202) and preferably overlap slightly in the longitudinal direction.

20. A measuring instrument according to claim 19, **characterized in that** the two module groups (201, 202) are driven so as to be displaceable in an opposed manner in the longitudinal direction, wherein the longitudinal positions of the measurement modules of one module group (201) are interchangeable with the longitudinal positions of the measurement modules of the other module group (202).

21. A measuring instrument according to any one of claims 10 to 20, **characterized in that** the measurement modules (200) of one module group (201) are provided at least in part with different colour filters (22) from the measurement modules (200) of the other module group (202).

22. A measuring instrument according to any one of claims 18 to 21, **characterized in that** the measurement modules (200) are designed for six wavelength ranges in each case.

23. A measuring instrument according to any one of the preceding claims, **characterized in that** the measuring instrument (MD) is provided with polarization filters (18) capable of being removed from the beam paths (11a, 21 a), and computing means (C) are provided which convert the measurement values (406) produced by the line sensors (21) without the use of a polarization filter (18) into polarization filter measurement values (407) with reference to a parameterized model (405) and measurement values (401, 402) determined by the line sensors (21) only in selected pixels with and without polarization filters.

24. A measuring instrument according to claim 17, **characterized in that** computing means (C) are provided which convert the measurement values (406) produced by the line sensors (21) without the use of a polarization filter into polarization filter measurement values (407) with reference to a parameterized model (405) and measurement values (401, 402) determined by the spectral measurement head (300) in selected pixels with and without polarization filters (301).

25. A measuring instrument according to any one of the preceding claims, **characterized in that** computing means (C) are provided which convert the  measurement values ($M_1$ to $M_6$) produced by the line sensors (21) into standardized colour values (X, Y, Z) or colour density values (Dc, Dm, Dy) with reference to a model or by transformation.

26. A measuring instrument according to claim 16, **characterized in that** computing means (C) are provided which convert the measurement values produced by the line sensors (21) into spectral measurement values with reference to a parameterized model, wherein the parameters of the model are determined from measurement values which have been produced in selected pixels both by means of the line sensors (21) and by means of the spectral measurement head (300).

27. A measuring instrument according to any one of the preceding claims, **characterized in that** computing means (C) are provided in order to carry out a correction of scatter light by a computer with reference to measurements on a test sample.

28. A scanning apparatus for the pixel-wise photoelectric measurement of a measurement object, in particular a printed sheet preferably printed in multiple colours, with a measuring table (MT) to which the measurement object (S) is capable of being fastened for the measurement, with a measuring instrument (MD) which is capable of being moved over the surface of the measuring table (MT) and which in each case simultaneously scans photoelectrically a plurality of pixels - arranged in a line - of the measurement object (S) fastened to the measuring table (MT) and produces associated measurement signals for each scanned pixel, with a drive device (D) which moves the measuring instrument (MD) over the measurement object (S) so that all the pixels of the measurement object (S) are capable of being detected, with a measurement and drive control means (MDC) for the measuring instrument (MD) and the drive device (D), and with a processing device (C) in order to prepare and evaluate the measurement signals produced by the measuring instrument (MD) from the scanned pixels of the measurement object (S), wherein the measuring instrument (MD) is designed in accordance with claim 1.

29. A scanning apparatus according to claim 28, **characterized in that** the measuring  instrument is designed in accordance with any one of claims 2 to 27.

30. A scanning apparatus according to claim 28 or 29, **characterized in that** the length of the measuring instrument (MD) is smaller than the maximum scanning range of the measuring table (MT) to be scanned, and the measurement and drive control means (MDC) is designed in order to carry out the scanning of the entire measurement object (S) in two or more scanning passes, wherein the measuring instrument (MD) is offset in the longitudinal direction for each scanning pass.

31. A scanning apparatus according to any one of claims 28 to 30, **characterized in that** the measurement and drive control means (MDC) is designed in order to scan, in a special scanning pass, only selected pixels of the measurement object (S), preferably a colour measurement strip (CMS) contained on the measurement object (S), at a low scanning rate, so that sufficiently long measurement times for the use of polarization filters are available in this first scanning pass.

**32.** A scanning apparatus according to any one of claims 28 to 31, wherein the measuring instrument (MD) is designed in a modular manner and comprises a plurality of measurement modules (200) of substantially similar design which contain in each case separate linear arrangements of LEDs (11), separate linear optic arrangements (31) and separate line sensors (21) sensitized to different wavelength ranges by colour filters (22) arranged in front, **characterized in that** three of the colour filters (22) in all the measurement modules (200) are similar, so that all the measurement modules (200) scan the pixels of the measurement object (S) in the same three wavelength ranges, and computing means (C) are provided which calculate a preview picture from the scanning values of the pixels in these three wavelength ranges and preferably display them on the colour monitor (M).

**Revendications**

**1.** Dispositif de mesure (MD) pour la mesure photoélectrique par élément d'image d'un objet de mesure (S), notamment d'une feuille imprimée de préférence en plusieurs couleurs, où le dispositif de mesure (MD) balaie simultanément de manière photoélectrique respectivement une pluralité d'éléments d'image d'un objet de mesure (S) situés sur une ligne et génère des signaux de mesures correspondants pour chaque élément d'image balayé, avec un dispositif d'éclairage (11 à 13) pour appliquer une lumière d'éclairage (11a) aux éléments d'image de l'objet de mesure (S), avec un dispositif de réception photoélectrique sélectif en plage de longueurs d'onde et avec des moyens optiques de captage qui captent une lumière de mesure (21a) réémise par des éléments d'image de l'objet de mesure (S) éclairé et la conduisent au dispositif de réception photoélectrique, le dispositif de réception photoélectrique transformant la lumière de mesure (21a) lui ayant été envoyée par les éléments d'image de l'objet de mesure (S) en signaux de mesure correspondants pour les éléments d'image de l'objet de mesure (S), **caractérisé en ce que** le dispositif d'éclairage (11 à 13) comprends plusieurs arrangements linéaires parallèles de diodes électroluminescentes (11) qui appliquent une lumière d'éclairage (11a) à l'objet de mesure (S) en un nombre de bandes d'éclairage (15) parallèles, que le dispositif d'éclairage (11 à 13) comprends des moyens (12, 13) pour limiter la plage angulaire d'angles d'incidence, de sorte que chaque élément d'image situé et éclairé dans les bandes d'éclairage (14) ne reçoit essentiellement de la lumière (11a) qu'à l'intérieur d'une plage angulaire d'angles d'incidence standardisée pour des utilisations de mesure de couleur, que le dispositif de réception photoélectrique comprend un nombre de capteurs de lignes (21) photoélectriques, correspondant au nombre de bandes d'éclairage (15), disposés en parallèle à distance l'un de l'autre, qui sont orientés parallèlement à l'extension longitudinale des bandes d'éclairage (15) et sont sensibilisés à différentes plages de longueurs d'onde par des filtres couleur (22) disposés en amont, que les moyens optiques de captage comprennent un nombre d'assemblages optiques (31) linéaires correspondant au nombre de capteurs de lignes (21) qui sont orientés parallèlement aux bandes d'éclairage (15) et qui conduisent de la lumière de mesure (21a) réémise par respectivement une ligne d'image (16) à l'intérieur des bandes d'éclairage (15) vers respectivement l'un des capteurs de ligne (21), les assemblages optiques (31) linéaires étant configurés de telle sorte que la lumière de mesure (21a) provenant essentiellement de chacun des éléments d'image de la ligne d'image (16) n'est captée que sous une plage angulaire d'angles de réflexion standardisée pour des utilisations de mesure de couleur, et que les bandes d'éclairage (15) avec les assemblages optiques (31) linéaires et capteurs de lignes (21) correspondants sont séparées optiquement les unes des autres, de sorte que des signaux de mesure provenant de lignes d'image (16) à l'intérieur de bandes d'éclairage (15) adjacentes ne peuvent pas s'influencer mutuellement ;
les moyens pour limiter la plage angulaire d'angles d'incidence comportant des diaphragmes à fente (13) qui limitent la largeur des bandes d'éclairage (15) éclairées sur l'objet de mesure (S), de préférence à une valeur plus petite que le champ optique des assemblages optiques linéaires (31), transversalement par rapport à leur longueur.

**2.** Dispositif de mesure selon la revendication 1, **caractérisé en ce que** des moyens sont prévus qui réduisent au moins l'influence réciproque entre les signaux de mesure provenant d'éléments d'image adjacents à l'intérieur de la même ligne d'image (16) de l'objet de mesure.

**3.** Dispositif de mesure selon l'une quelconque des revendications précédentes, **caractérisé en ce que** les moyens pour réduire la plage angulaire d'angles d'incidence comprennent des lentilles collimatrices (12) correspondant aux ensembles linéaires de diodes électroluminescentes (11).

4. Dispositif de mesure selon l'une quelconque des revendications précédentes, **caractérisé en ce que** des lamelles de diaphragme (219) sont disposées entre les diodes électroluminescentes (11) individuelles d'un arrangement de diodes électroluminescentes afin de limiter l'angle d'éclairage dans la direction linéaire.

5. Dispositif de mesure selon l'une quelconque des revendications précédentes, **caractérisé en ce que** les filtres couleur (22) sont disposés obliquement par rapport à la trajectoire principale des rayons (21a) de la lumière de mesure frappant les capteurs de lignes (21) afin de réduire les effets diaphoniques à l'intérieur des lignes d'image (16).

6. Dispositif de mesure selon l'une quelconque des revendications précédentes, **caractérisé en ce que** les assemblages optiques (31) linéaires consistent en une juxtaposition en parallèle de lentilles à gradient d'indice (31a).

7. Dispositif de mesure selon l'une quelconque des revendications précédentes, **caractérisé en ce que** les capteurs de lignes (21) sont formés par des éléments CIS (capteur d'images par contact) intégrés.

8. Dispositif de mesure selon l'une quelconque des revendications précédentes, **caractérisé en ce que** les arrangements linéaires de diodes électroluminescentes (11) comprennent des diodes électroluminescentes de grande puissance avec des caractéristiques de réflexion selon Lambert.

9. Dispositif de mesure selon l'une quelconque des revendications précédentes, **caractérisé en ce que** sont prévus au moins six capteurs de ligne (21) et assemblages optiques (31) correspondants, les capteurs de ligne (21) étant sensibilisés à différentes plages de longueurs d'onde par des filtres couleur (22) disposés en amont.

10. Dispositif de mesure selon la revendication 9, **caractérisé en ce que** trois des filtres couleur (22) comprennent une caractéristique de bande passante des filtres standardisés pour la mesure d'une densité de couleur et trois des filtres couleur ont des caractéristiques de bande passante différentes optimisées pour la mesure de couleur.

11. Dispositif de mesure selon l'une quelconque des revendications précédentes, **caractérisé en ce que** respectivement une paire de bande d'éclairage (15) adjacentes sont éclairées par un ensemble linéaire commun de diodes électroluminescentes (11).

12. Dispositif de mesure selon l'une quelconque des revendications précédentes, **caractérisé en ce que** les diodes électroluminescentes des arrangements linéaires sont adaptées en termes de caractéristiques spectrales aux caractéristiques de bande passante des filtres couleur (22) utilisés.

13. Dispositif de mesure selon l'une quelconque des revendications précédentes, **caractérisé en ce qu'**au moins un des arrangements linéaires comprends des diodes électroluminescentes (11) émettant dans le domaine infrarouge proche.

14. Dispositif de mesure selon l'une quelconque des revendications précédentes, **caractérisé en ce qu'**au moins un des capteurs de ligne (21) est sensibilisé à deux plages de longueurs d'onde différentes, l'une desquelles se trouvant de préférence dans le domaine infrarouge proche.

15. Dispositif de mesure selon l'une quelconque des revendications précédentes, **caractérisé en ce qu'**au moins un des arrangements linéaires de diodes électroluminescentes (11) comprends des diodes électroluminescentes avec des caractéristiques spectrales différentes aptes à être activées de manière sélective et qu'au moins l'un des filtres couleur (22) est configuré comme filtre passe-bande double qui transmet deux plages de longueurs d'onde différentes et qui est adapté aux différentes caractéristiques spectrales des diodes électroluminescentes.

16. Dispositif de mesure selon l'une quelconque des revendications précédentes, **caractérisé en ce qu'**il comprend en outre au moins une tête de mesure spectrale (300) déplaçable par moteur parallèlement aux bandes d'éclairage (16) pour la mesure spectrale d'éléments d'image individuels.

17. Dispositif de mesure selon la revendication 16, **caractérisé en ce que** la tête de mesure spectrale (300) est équipée d'un filtre polarisant (301) apte à être introduit dans, puis retiré de la trajectoire des rayons de mesure, de sorte que les mesures spectrales sont réalisables avec t sans filtre polarisant.

18. Dispositif de mesure selon l'une quelconque des revendications précédentes, **caractérisé en ce qu'**il est assemblé de manière modulaire et comprends un nombre de modules de mesure (200) de construction essentiellement identique, qui contiennent respectivement leurs propres arrangements linéaires de diodes électroluminescentes, leurs propres assemblages optiques (31) linéaires et leurs propres capteurs de ligne (21) sensibilisés à différentes plages de longueurs d'ondes par des filtres couleurs (22) disposés en amont.

**19.** Dispositif de mesure selon la revendication 18, **caractérisé en ce que** les modules de mesure (200) sont disposés de manière linéaire en deux groupes de modules (201, 202) parallèles espacés, les modules de mesure (200) de l'un des groupes (201) étant disposés en quinconce par rapport aux modules de mesure (200) de l'autre groupe (202) et se superposent de préférence légèrement dans la direction longitudinale.

**20.** Dispositif de mesure selon la revendication 19, **caractérisé en ce que** les deux groupes de modules (201, 202) sont actionnés de manière à être déplaçables en sens inverse dans la direction longitudinale, les positions longitudinales des modules de mesure de l'un des groupes de modules (201) étant échangeables avec les positions longitudinales des modules de mesure de l'autre groupe de modules (202).

**21.** Dispositif de mesure selon l'une quelconque des revendications 10 à 20, **caractérisé en ce que** les modules de mesure (200) de l'un des groupes de modules (200) sont au moins partiellement équipés d'autres filtres couleur (22) que les modules de mesure (200) de l'autre groupe de modules (202).

**22.** Dispositif de mesure selon l'une quelconque des revendications 18 à 21, **caractérisé en ce que** les modules de mesure (200) sont respectivement conçus pour six plages de longueurs d'onde.

**23.** Dispositif de mesure selon l'une quelconque des revendications précédentes, **caractérisé en ce que** le dispositif de mesure (MD) est équipé de filtres polarisants (18) aptes à être retirés des trajectoires de rayons (11a, 21a) et que des moyens de calcul (C) sont prévus qui convertissent en valeurs mesurées de filtre polarisant (407) les valeurs mesurées (406) générées par les capteurs de ligne (21) sans utilisation d'un filtre polarisant (18) au moyen d'un modèle paramétré (405) et les valeurs mesurées (401, 402) déterminées par les capteurs de ligne (21), avec et sans filtre polarisant, uniquement dans des éléments d'image choisis.

**24.** Dispositif de mesure selon la revendication 17, **caractérisé en ce que** des moyens de calcul (C) sont prévus qui convertissent en valeurs mesurées de filtre polarisant (407) les valeurs mesurées (406) générées par les capteurs de ligne (21) sans utilisation d'un filtre polarisant au moyen d'un modèle paramétré (405) et les valeurs mesurées (401, 402) déterminées par la tête de mesure spectrale (300), avec et sans filtre polarisant (301), dans des éléments d'image choisis.

**25.** Dispositif de mesure selon l'une quelconque des revendications précédentes, **caractérisé en ce que** des moyens de calcul (C) sont prévus qui convertissent les valeurs de mesure ($M_1$ -$M_6$) générées par les capteurs de ligne (21) en valeurs colorimétriques (X, Y, Z) ou en valeurs de densité de couleur (Dc, Dm, Dy) au moyen d'un modèle ou par transformation.

**26.** Dispositif de mesure selon la revendication 16, **caractérisé en ce que** des moyens de calcul (C) sont prévus qui convertissent au moyen d'un modèle paramétré les valeurs mesurées générées par les capteurs de ligne (21) en valeurs spectrales mesurées, les paramètres du modèle étant déterminés à partir de valeurs mesurées générées au moyen des capteurs de ligne (21) ainsi qu'au moyen de la tête de mesure spectrale (300) dans des éléments d'image choisis.

**27.** Dispositif de mesure selon l'une quelconque des revendications précédentes, **caractérisé en ce que** des moyens de mesure (C) sont prévus pour mettre en oeuvre une correction calculée de la lumière diffuse au moyen de mesures sur un motif test.

**28.** Dispositif de balayage pour la mesure photoélectrique par élément d'image d'un objet de mesure, notamment d'une feuille imprimée de préférence en plusieurs couleurs, avec une table de mesure (MT) sur laquelle l'objet de mesure (S) est attachable pour la mesure, avec un dispositif de mesure (MD), déplaçable au-dessus de la surface de la table de mesure (MT), qui balaie simultanément de manière photoélectrique respectivement une pluralité d'éléments d'image situés sur une ligne de l'objet de mesure (S) fixé à la table de mesure (MT) et génère des signaux de mesures correspondants pour chaque élément d'image balayé, avec un dispositif d'entraînement (D) qui déplace le dispositif de mesure (MD) au-dessus de l'objet de mesure (S), de sorte que tous les éléments d'image de l'objet de mesure (S) soient captables, avec une commande de mesure et d'entraînement (MD) pour le dispositif de mesure (MD) et le dispositif d'entraînement (D) et avec un dispositif de traitement (C) pour traiter et exploiter les signaux de mesure générés par le dispositif de mesure (MD) à partir des éléments d'image de l'objet de mesure (S) balayés, où le dispositif de mesure (MD) est configuré selon la revendication 1.

29. Dispositif de balayage selon la revendication 28, **caractérisé en ce que** le dispositif de mesure est configuré selon l'une des revendications 2 à 27.

30. Dispositif de balayage selon la revendication 28 ou 29, **caractérisé en ce que** la longueur du dispositif de mesure est plus petite que la zone maximale de balayage de la table de mesure (MT) à balayer, et que la commande de mesure et d'entraînement (MDC) est configurée pour mettre en oeuvre le balayage de l'objet de mesure entier (S) en deux ou plusieurs passages de balayage, le dispositif de mesure (MD) étant déplacé dans la direction longitudinale pour chaque passage de balayage.

31. Dispositif de balayage selon l'une des revendications 28 à 30, **caractérisé en ce que** la commande de mesure et d'entraînement (MDC) est configurée pour ne balayer, au cours d'un passage de balayage spécial, que des éléments d'image choisis de l'objet de mesure (S), de préférence une bande de mesure de couleur (CMS) située sur l'objet de mesure (S), à une vitesse de balayage réduite, de sorte que soient disponibles, lors de ce premier passage de balayage, des durées de mesure suffisamment longues pour l'utilisation de filtres polarisants.

32. Dispositif de balayage selon l'une quelconque des revendications 28 à 31, où le dispositif de mesure (MD) est assemblé de manière modulaire et comprends un nombre de modules de mesure (200) de construction essentiellement identique, qui contiennent respectivement leurs propres arrangements linéaires de diodes électroluminescentes (11), leurs propres assemblages optiques (31) linéaires et leurs propres capteurs de ligne (21) sensibilisés à différentes plages de longueurs d'ondes par des filtres couleurs (22) disposés en amont, **caractérisé en ce que** trois des filtres couleur (22) sont identiques pour tous les modules de mesure (200), de sorte que tous les modules de mesure (200) balaient les éléments d'image de l'objet de mesure (S) dans trois mêmes plages de longueurs d'ondes, et que des moyens de calcul (C) sont prévus qui calculent une image de prévisualisation à partir des données de balayage des éléments d'image dans ces trois plages de longueurs d'onde et l'affichent de préférence sur le moniteur couleur (M).

Fig. 1

Fig. 2

## Fig. 3

## Fig. 7

26

**Fig. 5**

**Fig. 6**

EP 1 805 978 B1

Fig. 4

Fig. 8

[nm]

[nm]

28

| Sensoren | Lichtquellen | Antriebe |
|---|---|---|

21

11

108

| Sensor-Stg. | Lampen-Stg. | Antrieb-Stg. |
|---|---|---|

101

102

103

Hauptsteuerung
Schnittstelle zu ext. Rechner

104

MDC

| Messwerte | Steuerbefehle |
|---|---|

106

105

Externer Rechner

C

**Fig. 9**

**Fig. 10**

**Fig. 11**

**Fig. 12**

## Fig. 13

## Fig. 14

**Fig. 15**

**Fig. 19**

**Fig. 16**

**Fig. 17**

**Fig. 18**

## Fig. 20

## Fig. 21

**Fig. 22**

**Fig. 25**

## Fig. 23

300   200   270   MD   271

201

202 →

200   280   281

## Fig. 24

300   200   27O   MD   271

201 →

202

200   280   281

401

Messdaten von
Spektralmesskopf
ohne Pol.-Filter

403

Parameter
Berechnung

402

Messdaten von
Spektralmesskopf
mit Pol.-Filter

404

Parameter

406

Messdaten von
Zeilenscanner
(ohne Pol.-Filter)

405

Parametrisiertes
Modell

407

Berechnete Pol.-
Filter-Messdaten

**Fig. 26**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6028682 A

- DE 19650223 A